(19)

Europäisches
Patentamt
European
Patent Office
Office européen
des brevets

(11) **EP 3 729 210 B1**

(12) **EUROPEAN PATENT SPECIFICATION**

(45) Date of publication and mention
of the grant of the patent:
**28.08.2024 Bulletin 2024/35**

(21) Application number: **18826214.1**

(22) Date of filing: **11.12.2018**

(51) International Patent Classification (IPC):
***G05B 17/02*** *(2006.01)* ***E21B 41/00*** *(2006.01)*

(52) Cooperative Patent Classification (CPC):
**G05B 17/02; E21B 41/00;** G01V 20/00;
G06F 30/20; G06F 2111/10

(86) International application number:
**PCT/EP2018/084373**

(87) International publication number:
**WO 2019/121168 (27.06.2019 Gazette 2019/26)**

(54) **PARALLEL PRODUCTION SIMULATION OF A MATURE HYDROCARBON FIELD**

PARALLELE PRODUKTIONSSIMULATION EINES REIFEN KOHLENWASSERSTOFFFELDES

SIMULATION DE PRODUCTION EN PARALLÈLE D'UN CHAMP D'HYDROCARBURE MATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2017 US 201715844708**

(43) Date of publication of application:
**28.10.2020 Bulletin 2020/44**

(73) Proprietor: **Foroil**
**75008 Paris (FR)**

(72) Inventors:
• **HEINTZ, Bruno**
**75015 Paris (FR)**

• **OURY, Jean-Marc**
**75007 Paris (FR)**
• **DE SAINT GERMAIN, Hugues**
**Taï Tam, Hong Kong (HK)**
• **YUEN, Jean-François**
**75003 Paris (FR)**
• **DESJARDINS, Benoit**
**92350 Le Plessis Robinson (FR)**

(74) Representative: **Cabinet Beau de Loménie**
**158, rue de l'Université**
**75340 Paris Cedex 07 (FR)**

(56) References cited:
**US-A1- 2004 220 790     US-A1- 2011 313 744
US-A1- 2013 191 091     US-A1- 2014 136 171**

**Description**

FIELD

**CROSS-REFERENCE TO RELATED APPLICATION(S)**

The present application is related to U.S. Application No. 12/816,940, filed on June 16, 2010, now U.S. Patent 8,412,501, and U.S. Application No. 13/675,691, filed on November 13, 2012, now U.S. Patent 9,031,821.

**BACKGROUND**

1. Technical Field

The technical domain of the present disclosure is the exploitation of hydrocarbon fields. More particularly the present disclosure concerns a method of building a reliable simulator able to forecast quantities produced vs. production parameters, in the particular case of mature fields.

2. Background Art

Mature hydrocarbon fields represent a special challenge both in terms of investment and allocation of human resources, because the net present value of any new investment diminishes with the degree of maturity. Therefore, less and less time and effort can be invested in reservoir studies to support field exploitation. Still, there remain opportunities to improve the production over a so-called "baseline" or "business as usual" behavior of an entire mature field, even with little investment. Past strategic choices in the way to operate the hydrocarbon field have created some heterogeneity in pressure and saturation. These can be drastically revisited and production parameters reshuffled accordingly. With respect to a mature hydrocarbon field, many production avenues have been explored in the past, and a learning process can be applied: reshuffled parameters can be implemented with low risk.

Two prior art approaches are currently known to model the behavior of a hydrocarbon field and to forecast an expected quantity produced in response to a given set of applied production parameters.

A first approach, called "meshed model" or "finite element modeling" parts a reservoir into more than 100,000s of elements (cells, flowlines...), each cell carrying several parameters (permeability, porosity, initial saturation...), and applies physical laws over each of said cells in order to model the behavior of fluids in the hydrocarbon field. In that case the so-called Vapnik-Chervonenkis, VC-dimension h of the space of solutions S, from which the simulator is selected, is very large. Therefore, the available number m of measured data in history data remains comparatively small, even for mature fields, and the ratio $\frac{h}{m}$ appears to be very large compared to 1. As a result of the Vapnik learning theory, which is further mentioned later, the forecast expected risk R is not properly bounded (due to the $\Phi$ term), and such a simulator cannot be considered to be reliable, even if it presents a very good match with history data. In practice, it is widely recognized that for such meshed models, a good history match does not guarantee a good forecast: there are billions of ways to match the past, leaving large uncertainty on which one provides a good forecast.

A second approach, by contrast, uses over-simplified models, such as, for instance, decline curves or material balance. However, this is too simplified to properly take into account the relevant physics and geology of the reservoir, in particular complex interaction and phenomena. In such case, the forecast expected risk R is not minimized, because no good match can be reached (the empirical Risk $R_{emp}$ term remains large).

The document US 2013/191091 A1 discloses a method to enable scalable parallel reservoir simulations. The document US 2011/313744 A1 discloses a production simulator for simulating a mature hydrocarbon field.

**SUMMARY**

In summary, the present disclosure represents a proper compromise between too complex and too simplistic modeling approaches. It is valid only for mature fields, which deliver enough past information, in the form of history data HD, to allow building a space S of candidates for becoming a field production simulator, large enough to take into account all key phenomena at stake in the field, without becoming too complex and hence requiring too many history data to be calibrated.

The Vapnik statistical learning theory defines under which conditions such a simulator can be devised. Such a simulator may be designed in such a way it complies with the conditions for a reliable forecasting capacity.

The invention is defined in the independent claims. Advantageous embodiments are defined in the dependent claims.

The object of the present disclosure is a production simulator, for simulating a mature hydrocarbon field, providing quantity produced per phase, per well, per layer (or group of layers) and per time as a function of production parameters, wherein said production simulator matches sufficiently well history data of said mature hydrocarbon field and verifies a Vapnik condition. This said Vapnik condition ensures that the quantities calculated to be produced per phase, per well, per layer (or group of layers) and per time to be accurate. This will allow the users of this simulator to play different production scenarios, according to different production parameters, each of them delivering reliable quantities, so that such scenarios can be properly compared to each other and an appropriate one can be selected according to specific criteria. As all production scenarios will deliver reliable quantities, the selected one will also deliver a reliable forecast of the production, and therefore it will become a low risk and preferred path for producing the field.

According to another feature of the present disclosure, a match with history data is obtained when:

$$\frac{\left\| Q_{\varphi ktb} - Q_{\varphi ktbHD} \right\|_{[T_1-Xy,T_1]}}{\left\| Q_{\varphi ktbHD} \right\|_{[T_1-Xy,T_1]}} \leq \varepsilon_1$$

, for more than p% of existing $Q_{\varphi ktbHD}$ values and the cumulated oil produced over the same $[T_1-Xy, T_1]$ time interval is accurate up to $\varepsilon_2$, where

$Q_{\varphi ktb}$ are quantities produced per phase $\varphi \in \{$oil, water, gas$\}$, per well $k$, per layer $b$ (or group of layers) and per time $t$, determined by the production simulator,

$Q_{\varphi ktbHD}$ are the same quantities produced per phase, per well, per layer (or group of layers) and per time, found in history data (HD),

$[T_1-Xy, T_1]$ is the time interval comprising the most recent X years before time $T_1$,

$T_1$ being the last date for which history data is available,

$\|Z\|_{[T_1,T_2]}$, denotes a norm of Z over time interval $[T_1,T_2]$,

$\varepsilon_1$ being a positive number small with respect to 1, and

$\varepsilon_2$ being a positive number small with respect to 1, and p being a positive number close to 100%.

Such feature allows to practically defining the situation when a simulator can be considered as delivering a satisfactory history match, which is a necessary condition, to be a candidate for showing satisfactory forecasting capacities.

According to another feature of the present disclosure, X = 5, $\varepsilon_1$ = 0.2, and $\varepsilon_2$ = 0.15 and p = 90%.

Such feature allows framing the conditions under which the history match can be considered as accurate; it gives an order of magnitude of the accuracy, which can be expected for satisfactory forecasted quantities.

According to another feature of the present disclosure, the Vapnik condition is expressed as $\dfrac{h}{m} \leq 0,1$ , where:

$h$ is the Vapnik-Chervonenkis dimension of the space $S$ of solutions, from which the simulator is selected, and
$m$ is the number of independent measures available in history data. Such feature allows framing the conditions, when they can be calculated, for achieving a satisfactory forecasting capacity.

According to another feature of the present disclosure, the Vapnik condition is verified by realizing a satisfactory blind test over N years, as defined by the following steps:

- determining a production simulator matching history data over a time interval preceding T-Ny,
- forecasting quantities produced over a time interval [T-Ny, T] given production parameters over the same time interval [T-Ny, T],
- the blind test being satisfactory when:

$$\frac{\left\| Q_{\varphi ktb} - Q_{\varphi ktbHD} \right\|_{[T-Ny,T]}}{\left\| Q_{\varphi ktbHD} \right\|_{[T-Ny,T]}} \leq \varepsilon_1$$

, for more than p% of existing $Q_{\varphi ktHD}$ values and the cumulated oil produced over the same [T-Ny, T] time interval is accurate up to $\varepsilon_2$, where

$Q_{\varphi ktb}$ are quantities produced per phase, per well, per layer (or group of layers) and per time, determined by the production simulator,

$Q_{\varphi ktbHD}$ are the same quantities produced per phase, per well, per layer (or group of layers) and per time, found in history data,

[T-Ny, T] is the time interval comprising the most recent N years before time T,

T being the last date for which history data is made available,

$\|X\|_{[T_1,T_2]}$ denotes a norm of X over time interval $[T_1,T_2]$,

$\varepsilon_1$ being a positive number small with respect to 1, and

$\varepsilon_2$ being a positive number small with respect to 1, and p being a positive number close to 100%.

Such feature allows defining a discriminating test for deciding whether a simulator exhibits a satisfactory forecasting capacity, without looking at the way it has been set up, but rather at the actual results it can achieve. Such feature allows carrying out the test without the need to wait for years and measure the results, but rather to use data already available to the third party conducting the test, and not available to the party setting up the simulator (the latter party is "blind").

According to another feature of the present disclosure, $\varepsilon_1$ = 0.1, and $\varepsilon_2$ = 0.1, p = 90% and N = 3.

Such feature allows framing practical conditions for the blind test, which can be accepted for properly discriminating a satisfactory simulator from a non-satisfactory simulator.

According to another feature of the present disclosure, the Vapnik condition is a forecast stability property

$$\frac{\|PP - PP'\|_{[T_0,T]}}{\|PP\|_{[T_0,T]}} \leq \varepsilon \quad \text{and} \quad \frac{\|Q_{\varphi ktbHD} - Q_{\varphi ktbHD}'\|_{[T_0,T]}}{\|Q_{\varphi ktbHD}\|_{[T_0,T]}} \leq \varepsilon \quad \text{then} \quad \frac{\|Q_{\varphi ktb} - Q_{\varphi ktb}'\|_{[T,T+Ny]}}{\|Q_{\varphi ktb}\|_{[T,T+Ny]}} \leq n\varepsilon$$

verified when if                                    and                                    then

where

PP are production parameters,

PP' are slightly varying different production parameters,

$Q_{\varphi ktbHD}$ are quantities produced per phase, per well, per layer (or group of layers) and per time, found in history data,

$Q_{\varphi ktbHD}'$ are slightly varying different quantities produced per phase, per well, per layer (or group of layers) and per time, found in a slightly varying different history data,

$Q_{\varphi ktb}$ are quantities produced per phase, per well, per layer (or group of layers) and per time, determined by the production simulator,

$Q_{\varphi ktb}'$ are quantities produced per phase, per well, per layer (or group of layers) and per time, determined by another close enough production simulator determined out of slightly varying different history data,

$[T_0, T]$ is the time interval from time $T_0$ to time T, being respectively the initial and the last date for which history data is available,

[T, T+Ny] is the time interval comprising the Ny years after time T,

$\|Z\|_{[T_1,T_2]}$ denotes a norm of Z over time interval $[T_1,T_2]$,

$\varepsilon$ being a positive number small with respect to 1, and

n being a small integer less than 5.

Such feature allows defining whether a simulator exhibits properties, which are a pre-requisite to reliably calculate forecasted quantities. This test does not require comparing with another existing simulator, nor does it require knowing about the way this simulator has been set up, as only its resulting properties are tested.

According to another feature of the present disclosure, $\varepsilon$ = 0.05, n = 2 and N = 3.

This feature allows practically framing the forecast stability, over a period of three years.

According to another feature of the present disclosure, the production simulator is built following the steps of:

- defining initial detailed reservoir partition, rock properties, laws of reservoir physics and laws of well physics,
- upscaling said reservoir partition, rock properties, laws of reservoir physics and laws of well physics until said Vapnik condition is verified, and
- calibrating said production simulator by choosing among the production simulator candidate solutions, the candidate solution, defined by $\alpha$ and minimizing an expected so called "empirical risk" $R_{emp}(\alpha)$.

Upscaling means reducing complexity. Upscaling is carried out in such a way that the space of solutions candidates for becoming a simulator is such as $\Phi\left(\dfrac{h}{m}, \delta\right)$ is as small as possible, where:

$\delta$ is a positive number close to zero, 1- $\delta$ defining a probability and
$\Phi$ is a positive function defined by:

$$\Phi\left(\frac{h}{m},\delta\right) = 2\sqrt{\frac{2}{m}\left(h\log\left(\frac{2em}{h}\right) + \log\left(\frac{2}{\delta}\right)\right)},$$

where
$h$ is the Vapnik-Chervonenkis dimension of the space of solutions, and
$m$ is the number of independent measures available in history data,
$e$ is equal to exp(1).

Calibrating the production simulator among the candidates of the space of solutions means making the "empirical risk" $R_{emp}$ $(\alpha)$ as small as possible, while choosing the appropriate parameters $\alpha$ that completely defines a solution within the space of solutions. This empirical risk $R_{emp}(\alpha)$ measures a (positive) distance between actual past data and the corresponding data calculated by the simulator.

This upscaling process is a way to reach a trade-off between $\Phi\left(\frac{h}{m},\delta\right)$ and $R_{emp}(\alpha)$ values, which need to be together as small as possible, as the objective is to minimize their sum $R_{emp}(\alpha) + \Phi\left(\frac{h}{m},\delta\right)$ with a given probability 1- $\delta$ .

In minimizing the above-mentioned sum, this minimizes the expected risk of the forecast, $R(\alpha)$, according to the Vapnik inequality:

$$R(\alpha) \leq R_{emp}(\alpha) + \Phi\left(\frac{h}{m},\delta\right)$$

Such feature allows minimizing the expected risk of the forecast $R(\alpha)$, while starting from large values of

$\Phi\left(\frac{h}{m},\delta\right)$ (as starting models are complex) and small empirical risks $R_{emp}(\alpha)$ (as such complex models can properly picture past data) and gradually decrease the complexity, and therefore $\Phi\left(\frac{h}{m},\delta\right)$ while keeping a good match of past data, therefore keeping the empirical risk $R_{emp}(\alpha)$ small.

According to another feature of the present disclosure, said reservoir partition is upscaled following the steps of:

- partitioning a reservoir G into elementary parts $G_{ab}$, such that $G = \bigcup_{a=1}^{A}\bigcup_{b=1}^{B} G_{ab}$ with $G_{ab} \cap G_{a'b'} = \varnothing$ for (a,b) ≠ (a',b'), where $a \in \{1..A\}$ describes a x-y area, and $b E\{1..B\}$ describes one or several layers,
- grouping adjacent elementary parts exhibiting homogeneous rock properties, into sub-geologies $G_z$ where $zE\{1,...,Z\}$.

Such feature gives a practical way of upscaling the field geology in identifying a reasonably small number of sub-geologies $G_z$.

According to another feature of the present disclosure, rocks properties are upscaled by following a step of averaging out rock properties over each sub-geology, according to formula: $RP_z = \frac{1}{V_z}\iiint_{G_z} RP(x, y, z)dxdydz$ ,
where $V_z$ is the volume of sub-geology $G_z$.

This feature explains a way to practically define the properties to be used in a given sub-geology $G_z$.

According to another feature of the present disclosure, laws of reservoir physics are upscaled in such a way they apply with functioning parameters of the sub-geology and wherein space and times scales associated with the sub-geology are determined in such a way that the associated space of solutions is consistent with the complexity of history data at the well level.

Such feature gives the rules to look for upscaled reservoir physics laws, in focusing on their behavior measured at well level.

According to another feature of the present disclosure, the production simulator is built following the steps of:

- defining initial coarse reservoir partition, rock properties, laws of reservoir physics and laws of well physics,
- downscaling said reservoir partition, rock properties, laws of reservoir physics and laws of well physics while keeping said Vapnik condition verified, until the production simulator matches history data and
- calibrating said production simulator by choosing among the production simulator candidate solutions, the candidate solution minimizing a forecast expected risk.

Downscaling means increasing complexity, starting from a simplistic description of the field, and adding relevant reservoir and/or well phenomena, which will properly picture the behavior of the entire field, well by well. Downscaling is carried out in such a way that the space of solutions candidates for becoming a simulator remains such as $\Phi\left(\dfrac{h}{m},\delta\right)$ is as small as possible, where:

$\delta$ is a positive number close to zero, 1- $\delta$ defining a probability and
$\Phi$ is a positive function defined by:

$$\Phi\left(\frac{h}{m},\delta\right) = 2\sqrt{\frac{2}{m}\left(h\log\left(\frac{2em}{h}\right)+\log\left(\frac{2}{\delta}\right)\right)},$$

where
$h$ is the Vapnik-Chervonenkis dimension of the space of solutions, and
$m$ is the number of independent measures available in history data,
$e$ is equal to exp(1).

Calibrating the production simulator among the candidates of the space of solutions means making the "empirical risk" $R_{emp}(\alpha)$ as small as possible, while choosing the appropriate parameters "$\alpha$" that completely defines a solution within the space of solutions. This empirical risk measures a distance between actual past data and the corresponding data calculated by the simulator.

This downscaling process is a way to reach a trade-off between $\Phi\left(\dfrac{h}{m},\delta\right)$, and $R_{emp}(\alpha)$ values, which need to be together as small as possible, as the objective is to minimize their sum $R_{emp}(\alpha)+\Phi\left(\dfrac{h}{m},\delta\right)$ with a given probability 1- $\delta$ .

In minimizing the above-mentioned sum, this minimizes the expected risk of the forecast, $R(\alpha)$, according to the Vapnik inequality:

$$R(\alpha) \le R_{emp}(\alpha) + \Phi\left(\frac{h}{m},\delta\right)$$

Such feature allows minimizing the expected risk of the forecast $R(\alpha)$, while starting from small values of

$$\Phi\left(\frac{h}{m}, \delta\right)$$

(as starting models are simplistic) and large empirical risks $R_{emp}(\alpha)$ (as such simplistic model do not properly

$$\Phi\left(\frac{h}{m}, \delta\right)$$

picture past data) and gradually increasing the complexity, and therefore increasing $\quad$ in order to better match past data, therefore decreasing the empirical risk $R_{emp}(\alpha)$.

According to another feature of the present disclosure, said reservoir partition is downscaled following the steps of:

- starting from the whole reservoir,
- parting said reservoir into sub-geologies where a substantial change of reservoir properties is present at around the boundary between said sub-geologies.

Such feature describes the process of going from global field description to a refined understanding, where local behaviors are identified at a finer scale $G_z$.

According to another feature of the present disclosure, wherein rocks properties are downscaled by defining new separate rock field properties over each sub-geology.

Such feature describes the principle of allocating different physical properties at the $G_z$ level.

According to another feature of the present disclosure, laws of reservoir physics are downscaled in such a way they apply with functioning parameters of the sub-geology and wherein space and times scales associated with the sub-geology are determined in such a way that the associated space of solutions is consistent with the complexity of history data at the well level.

Such feature gives the rules to look for downscaled reservoir physics laws, in focusing on their behavior measured at well level.

According to another feature of the present disclosure, the laws of reservoir physics are derived from the (Navier-)Stokes equations of conservation of momentum and conservation of mass for a fluid or gas evolving in a rock modeled as a porous medium, only characterized by its averaged porosity and relative /permeability per time per phase per sub-geology.

This feature explains how general laws of reservoir physics can be simplified at the sub-geology level, while averaging out some key parameters over the entire sub-geology $G_z$.

According to another feature of the present disclosure, the laws of reservoir physics comprise formulas:

$$u_{\varphi k} = -\frac{k}{\mu_b} k_{r\varphi}\left(\nabla P_\varphi - \rho_\varphi g\right),$$

where:

$u_{\varphi kz}$ is the velocity of phase $\varphi$ at well k, at sub-geology z,
$\mu_{\varphi z}$ is the viscosity of phase $\varphi$, at sub-geology z,
$P_{\varphi z}$ is the pressure of phase $\varphi$ at sub-geology z,
$\rho_{\varphi z}$ is the density of phase $\varphi$, at sub-geology z,
g is the gravity vector,
k is a permeability coefficient, and
$k_{r\varphi z}$ is a relative permeability coefficient of phase $\varphi$, at sub-geology z. $k_{r\varphi z}$ is a function of time, through its dependency on phase saturation.

This feature explains what law is considered in practice for fluid transport and how it is parameterized.

According to another feature of the present disclosure, the laws of reservoir physics further comprise heat transfer laws between a fluid or a gas and a rock given by the following formulas:

$$\Phi\partial_t\left(\rho_w S_w + \rho_g S_g\right) + \nabla \cdot \left(\rho_w u_w + \rho_g u_g\right) = 0$$

$$\Phi\partial_t(\rho_o S_o) + \nabla \cdot (\rho_o u_o) = 0,$$

$$S_o + S_w + S_g = 1,$$

$$\partial_t(E_s + E_f) + \nabla \cdot (U_f - \lambda(T)\nabla T) = 0,$$

where

$T = T(x,y,z)$ is the temperature and can vary over the reservoir,

$\Phi$ is the rock porosity,
$S_\varphi$ is the saturation of phase $\varphi$,
$\rho_\varphi$ is the density of phase $\varphi$,
$u_\varphi$ is the velocity of phase $\varphi$,
$E$ is the volumetric internal energy (indices $s$ and $f$ corresponding respectively to solid and fluid phases),
$U_f = U_g + U_o + U_w$ is the enthalpy flux, where $U_\varphi = \rho_\varphi h_\varphi u_\varphi$,

$h_\varphi$ is the specific enthalpy of phase $\varphi$,
$h_g = h_w + \Lambda$, $\Lambda$ being the specific heat of water vaporization,
g, w, o indexes being respectively for gas, water and oil,
$\lambda(T)$ is the reservoir conductivity coefficient.

This feature describes which heat transfer laws need to be considered and how they can be parameterized.

According to another feature of the present disclosure, the laws of reservoir physics further comprise phase laws given by:

$\mu_{\varphi z} = \mu_{\varphi z}(P,T)$ the viscosity of phase $\varphi$ at sub-geology z, function of the local pressure P and the local temperature $T$;
$\rho_{\varphi z} = \rho_{\varphi z}(P, T)$ the density of phase $\varphi$ at sub-geology z, function of the local pressure P and the local temperature $T$;
$k_{r\varphi z} = k_{r\varphi z}(P,T)$ the relative permeability coefficient of phase $\varphi$ at sub-geology z, function of the local pressure $P$ and the local temperature $T$.

This feature explains how laws of fluid propagation and laws of heat transfer are coupled, through dependency of pressure and temperature.

According to another feature of the present disclosure, laws of well physics comprise formulas:

$$Q_{\varphi ktz} = T_{kz}(PP_{ktz}, u_{\varphi kz})$$

where:

$Q_{\varphi ktz}$ is the quantity produced of phase $\varphi$ at well k in sub-geology z at time t,
$T_{kz}$ is a transfer function of well k, in sub-geology z
$PP_{ktz}$ are the production parameters applied to well k in sub-geology z at time t,
$u_{\varphi kz}$ is the velocity of phase $\varphi$ at well k in sub-geology z.

This feature explains how wells behaviors can be modeled, for instance through transfer functions. Such functions have the same "fineness" than the modeling of the reservoir: if a sub-geology $G_z$ includes several layers b, these will be averaged out together at the well level.

The present disclosure also concerns a method for optimally exploiting a mature hydrocarbon field, comprising the steps of:

-   building a production simulator according to any one of the preceding embodiments,
-   iterating several runs of said production simulator in order to find the optimal production parameters optimizing a gain value derived from said quantity produced,
-   applying said optimal production parameters so obtained to exploit the hydrocarbon field.

This feature describes a generic optimization process, aimed at maximizing a gain function on the field. It fully uses an aforementioned feature of the production simulator, namely its relative low-complexity, which allows very low computing time for calculating a given production scenario, defined by its corresponding production parameters. This low computing time renders possible playing a vast number of scenarios, typically more than millions of them in 24 hours.

According to another feature of the present disclosure, said optimized gain value is a net present value or reserves of said hydrocarbon field.

This feature illustrates a practical use of the present disclosure, which turns out to generate large financial gains, against non-optimized scenarios.

According to another feature of the present disclosure, said net present value can be determined using the formula:

$$NPV = \sum_i \left( \sum_k \sum_z P_{kz} * (1 - R_{ik}) \right) * \frac{S_i}{(1+d)^i}$$

$$- \sum_i \left( \sum_k I_{ik} + \sum_k OC_{ik} + \sum_k \sum_z (TO_i * P_{kz} + TL_i * L_{kz}) \right) * \frac{1}{(1+d)^i}$$

where:

$P_{kz}$ is oil production (in barrels) for well k and sub-geology z,
$R_{ik}$ is tax and royalties for well k and year i,
$S_i$ is the oil sale price (per barrel) for year i,
$d$ is the percentage discount rate,
$I_{ik}$ is investment made on well k during year i,
$OC_{ik}$ is operating costs for well k during year i,
$L_{kz}$ is the liquid production (in barrels) for well k and sub-geology z,
$TO_i$ is treatment cost (per barrel of oil), for year i.
$TL_i$ is treatment cost (per barrel of liquid), for year i.

This feature gives a practical way to define a gain function, which can be completely calculated using the production of wells, per phase per time and per sub-geology, which is itself calculated by the production simulator for any given set of production parameters.

## BRIEF DESCRIPTION OF THE DRAWINGS

The accompanying drawings, which are incorporated herein and form a part of the specification, illustrate the present disclosure and, together with the description, further serve to explain the principles of the disclosure and to enable a person skilled in the pertinent art to make and use the disclosure.

FIG. 1 shows an illustrative hydrocarbon field.
FIG. 2 is a block diagram of a simulator according to an embodiment.
FIG. 3 is a block diagram detailing a production simulator according to an embodiment.
FIG. 4 is a schematic view of an example oil field.
FIG. 5 illustrates example scenarios of an oil field.
FIG. 6 illustrates an example memory representation of multiple scenarios according to an embodiment.
FIG. 7 illustrates a multiple scenarios simulation run using a Single Instruction, Multiple Threads (SIMT) architecture according to an embodiment.
FIG. 8 illustrates a multiple scenarios simulation run using a Single Instruction, Multiple Data (SIMD) architecture according to an embodiment.
FIG. 9 illustrates a process for simulating the production of an oil field according to an embodiment.
FIG. 10 illustrates an example computer system which can be used to implement embodiments.

## DETAILED DESCRIPTION OF EMBODIMENTS

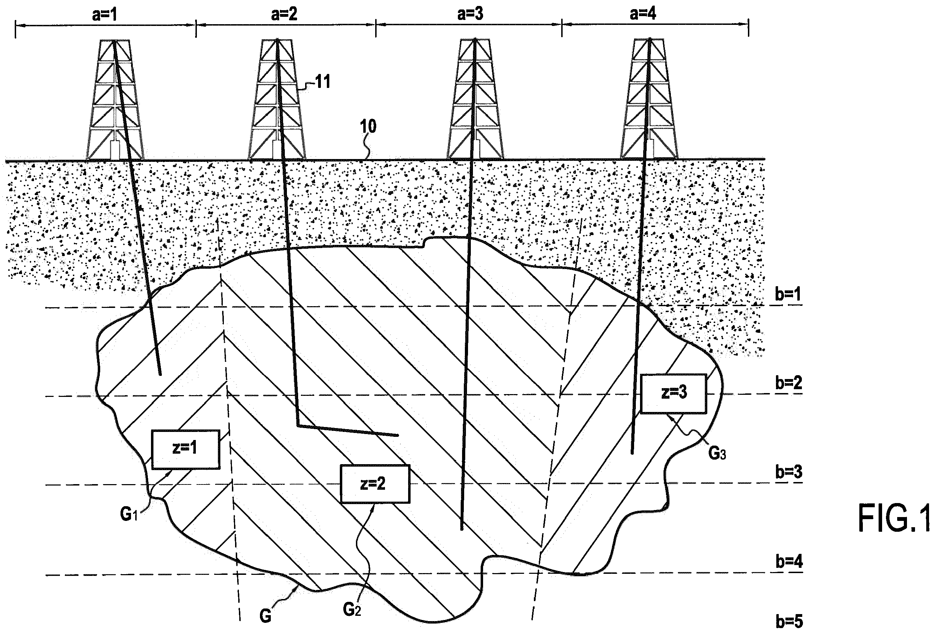

According to figure 1, a hydrocarbon field is a subterranean (or submarine) reservoir G comprising rock and gas and fluids of which oil. Said reservoir G is drilled from the surface 10 by several wells 11, in a known fashion. Said wells 11 may be injectors in charge of injecting a fluid, generally water, gas or steam, into the reservoir in order to change its properties, for instance to get its pressure or its temperature modified. Said wells 11 may instead be producers in charge of extracting gas, oil and associated fluids (and maybe other components) from the reservoir. Appropriate fluids or gas can also be injected into these producers, in order to enhance their production effectiveness or to get local reservoir properties to be modified.

The aim of the present disclosure is to calculate future hydrocarbon production per well, per phase and per sub-geology over time.

Another aim of the present disclosure is to determine and apply the optimal production parameters *PP,* that is, the production parameters *PP* that optimize a gain value e.g. the production, the NPV, reserves, of a mature hydrocarbon field.

The present disclosure concerns a method, for optimally exploiting a mature hydrocarbon field, based on an optimizer 1. Said optimizer 1 uses a production simulator 2 module that provides quantities produced $Q_{\varphi zkt}$ per phase $\varphi$, per well k, 11, per sub-geology z, and per time t (said time is generally expressed in month) as a function of production parameters *PP.* The phase $\varphi$ can be oil, gas, water or other relevant fluids like chemical additives (oil may be considered as a single phase or split into many different hydrocarbon phases). There can be several oil or gas phases, depending of hydrocarbons chains. Gas can be hydrocarbon, vapor or any other element.

Production parameters *PP* comprise all the driving parameters impacting the production. These production parameters include: injection rates that define the behavior of injectors, production rates, e.g. in terms of pumping rates, that define the behavior of producers but also well work-over, like perforation, completion, acidification, fracturation..., or some other impacting choices such as a possible conversion of a producer into an injector or else a drilling of an new additional well (be it a producer and/or an injector). *PP* can be sub-geology-dependent (e.g. for wells produced with multiple strings).

Such an optimizer 1 allows the test of new production strategies that would imply modifying production parameters against the baseline ("business as usual" production strategy).

Since said production simulator 2 is simple enough to quickly compute the result, the optimizer 1 may iterate many runs of said production simulator 2, thus trying a lot of strategies or scenarios, in order to find the optimal production parameters *PP* that optimize a gain value 5 derived from said quantity produced $Q_{\varphi zkt}$.

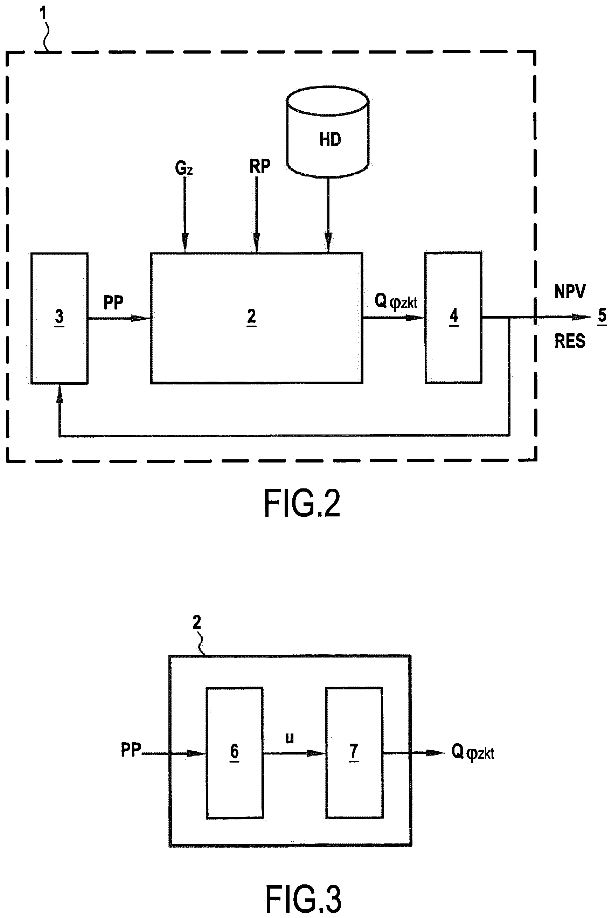

As figured by block diagram of figure 2, the essential brick of optimizer 1 is production simulator 2. For a given set of production parameters *PP,* it provides a forecast of quantities produced $Q_{\varphi zkt}$.

From said quantities produced $Q_{\varphi zkt}$ a gain value 5, to be optimized, can be computed by a module 4.

In optimizer 1 a module 3 is in charge of proposing said scenarios in the form of sets of production parameters *PP.* Several heuristics/algorithms may be used in said module 3, ranging from random Monte-Carlo methods to more efficient context aware methods to propose relevant candidate sets of production parameters *PP.*

As is figured by a feedback arrow, said module 3 may take advantage of the feedback value 5, to determine new sets, and to drive toward new scenarios, according to known optimization methods.

By so iterating, optimizer 1 may determine an optimal set of production parameters that optimize the gain value 5.

The method also comprises applying said optimal production parameters *PP* so obtained to drive the exploitation of the hydrocarbon field. As simulated, the expected gain or revenue can be optimal and at least better than the baseline.

To be efficient, according to an essential feature of the present disclosure, without reproducing the drawback of prior art solutions, said production simulator 2 must first match history data HD, that is provides a result that rather well compare to quantities produced $Q_{\varphi zkt}$ for the past, when applying the production parameters *PP* historically applied, thus differentiating from too simplistic models. Also, said production simulator 2 must verify a Vapnik condition.

The production simulator 2 is intended to produce estimated data for the future, starting from instant T, as accurate as possible. One necessary condition to pretend to such an accuracy is first that said production simulator matches history data HD, that is its reproduces known data in the past, that is so-called history data HD. Matching history data thus means the production simulator 2 is accurate enough to reproduce data produced such as quantities produced $Q_{\varphi zkt}$ per phase $\varphi$, per well k, per sub-geology z and per time t, and total cumulated oil produced, when known, that is before T. The quality of said match is appreciated by relatively comparing known quantities produced $Q_{\varphi zktHD}$ recorded in history data HD to quantities produced $Q_{\varphi zkt}$ as computed by mean of production simulator 2, to which past production parameters are applied. Cumulated oil produced is also compared between the sum of quantities produced $Q_{\varphi zktHD}$ recorded in history data HD, and the sum of quantities produced $Q_{\varphi zkt}$ as computed by mean of production simulator 2.

$$\frac{\left\| Q_{\varphi zkt} - Q_{\varphi zktHD} \right\|_{[T_1 - Xy, T_1]}}{\left\| Q_{\varphi zktHD} \right\|_{[T_1 - Xy, T_1]}} \le \varepsilon_1$$

Such a comparison can be expressed by for p% of the quantities $Q_{\varphi zktHD}$ and

$$\left| \sum_{k,z,t\in[T_1-Xy,T_1]} Q_{\varphi zkt} - \sum_{k,z,t\in[T_1-Xy,T_1]} Q_{\varphi zktHD} \right| \le \varepsilon_2$$ , where

$Q_{\varphi zkt}$ are quantities produced per phase $\varphi$, per well k, per sub-geology z and per time t, determined by the production simulator 2,

$Q_{\varphi zktHD}$ are the same quantities produced per phase $\varphi$, per well k, per sub-geology z and per time t, found in history data (HD),

$[T_1-Xy, T_1]$ is the time interval comprising the most recent X years before time $T_1$,

$T_1$ being the last date for which history data HD is available,

$\|Z\|_{[T_1,T_2]}$ denotes a norm of Z over time interval $[T_1,T_2]$,

$\varepsilon_1$ being a positive number small with respect to 1, and

$\varepsilon_2$ being a positive number small with respect to 1,

p being a number close to 100%.

The length of the interval considered for the matching condition may be adapted to the available length of history data. However if possible, length of five years is considered to be satisfactory. Such a length is consistent with a comparable horizon of expected accurate forecast for the production simulator 2, of five years.

The particular values of X = 5, p = 90%, $\varepsilon_1$ = 0.2 and $\varepsilon_2$ = 0.15 have been found satisfactory to detect a good match.

The norm used herein for comparison may be any one among: least square or weighted least square.

In addition to the matching condition, an accurate production simulator 2 must also verify a Vapnik condition. Said Vapnik condition may be expressed in different ways.

One of the results of the learning theory as developed by Vapnik shows that, from a given history data HD set of dimension $m$, that is, comprising $m$ independent measures, one can derive, by learning, a model within a space of VC-dimension $h$, with a reliability forecasting expected risk $R(\alpha)$ associated to parameters $\alpha$, bounded from above by the sum of two additive terms $R_{emp}(\alpha) + \Phi$. The first term $R_{emp}(\alpha)$ is an empirical risk associated with parameters $\alpha$, indicative of the quality of the matching to history data HD provided by said parameters $\alpha$. The second term $\Phi$ is

$$\Phi\left(\frac{h}{m},\delta\right) = 2\sqrt{\frac{2}{m}\left(h\log\left(\frac{2em}{h}\right)+\log\left(\frac{2}{\delta}\right)\right)}$$

characteristic of the model and can be expressed by , wherein $\delta$ is a positive number close to zero, 1- $\delta$ defining a probability of said forecast expected risk $R(\alpha)$ is indeed bounded by $R_{emp}(\alpha) + \Phi$, where $h$ is the aforementioned VC-dimension of the space $S$ of solutions, also named Vapnik-Chervonenkis or VC dimension, and $m$ is the aforementioned number of independent measures available in history data HD.

According to said result, prior art oversimplified models all suffer from a high $R_{emp}(\alpha)$ due to the over simplification of the model. Instead, prior art complex meshed models may provide a small $R_{emp}(\alpha)$, but suffer from a high $\Phi$ value,

due to an high $\dfrac{h}{m}$ ratio, since the VC-dimension $h$ of the space of solutions is too large with respect to the number $m$ of independent measures available in history data HD.

A trade-off has then to be reached. $m$ value is constant and given by history data HD available for a given hydrocarbon field. The size $h$ of the space of solutions has then to be adapted so that the $\dfrac{h}{m}$ ratio remains small. With an average objective of a five years forecast with a reliability of around +/-5%, a value $\dfrac{h}{m} \le 0{,}1$ has been found to be compatible with both the objective reliability and the possibility of scaling, as will be detailed further, to obtain a model.

Another way to express and check said Vapnik condition is by realizing a blind test. A blind test over N years may be realized by parting history data into two time intervals. A first "past" interval runs from an initial time $T_0$ for which history data are available, to a time *T-Ny* preceding the final time T by N years. A second "blind" interval runs from *T-Ny* to time T corresponding to the last time for which history data is available. T is generally the actual time. The data of "past" interval are considered as known, and are used to build a matching production simulator 2, by learning on said data. The data of "blind" interval are considered unknown or at least are concealed during the building of production simulator. They are then compared to data forecast by production simulator 2 over said "blind" interval given production parameters over the "blind" interval. A blind test is considered satisfactory when the forecast data reproduce with enough accuracy the history data over said concealed interval.

A blind test then comprises the following steps:

- determining a production simulator 2 matching history data HD over a time interval preceding *T-Ny,*
- forecasting quantities produced over a time interval *[T-Ny, T],*
- the blind test being satisfactory when:

$$\frac{\left\|Q_{\varphi ktb} - Q_{\varphi ktbHD}\right\|_{[T-Ny,T]}}{\left\|Q_{\varphi ktbHD}\right\|_{[T-Ny,T]}} \leq \varepsilon_1$$

, for more than p% of existing $Q_{\varphi ktbHD}$ values and the cumulated oil produced over the same [T-Ny, T] time interval is accurate up to $\varepsilon_2$, where

$Q_{\varphi ktb}$ are quantities produced per phase, per well, per layer (or group of layers) and per time, determined by the production simulator,

$Q_{\varphi ktbHD}$ are the same quantities produced per phase, per well, per layer (or group of layers) and per time, found in history data,

[T-Ny, T] is the time interval comprising the most recent N years before time T,

T being the last date for which history data is made available,

$\|Z\|_{[T_1,T_2]}$ denotes a norm of Z over time interval $[T_1,T_2]$,

$\varepsilon_1$ being a positive number small with respect to 1, and

$\varepsilon_2$ being a positive number small with respect to 1, and p being a positive number close to 100%.

The particular values of p = 90%, $\varepsilon_1$ = 0.1 and $\varepsilon_2$ = 0.1 have been found satisfactory to assert a good blind test. A period of N = 3 years is also satisfactory.

The norm used herein for comparison may be any one, for instance: least square or weighted least square.

Another way to check the Vapnik condition is expressed by measuring a forecast stability property. Such property test the stability of the production simulator 2 toward its output data in response of a slight variation of the input data. Input data are history data HD comprising production parameters PP and quantities produced $Q_{\varphi ktbHD}$ in the past, that is over a $[T_0, T]$ time interval. Based on these nominal data PP and $Q_{\varphi ktHD}$, a nominal production simulator 2 is built. These data are then slightly varied to obtain corresponding data PP' and $Q_{\varphi ktbHD}'$. Based on these slightly varied input data another production simulator is built that is expected to be close enough to nominal production simulator 2.

Output data, that is quantities produced $Q_{\varphi ktb}$ and $Q_{\varphi ktb}'$ are forecast respectively by nominal production simulator 2 and by other production simulator, over a future time interval [T, T+My], and are then compared.

The forecast stability property is verified when $\dfrac{\left\|PP - PP'\right\|_{[T_0,T]}}{\left\|PP\right\|_{[T_0,T]}} \leq \varepsilon$ and $\dfrac{\left\|Q_{\varphi ktbHD} - Q_{\varphi ktbHD}'\right\|_{[T_0,T]}}{\left\|Q_{\varphi ktbHD}\right\|_{[T_0,T]}} \leq \varepsilon$

$$\frac{\left\|Q_{\varphi ktb} - Q_{\varphi ktb}'\right\|_{[T,T+My]}}{\left\|Q_{\varphi ktb}\right\|_{[T,T+My]}} \leq n\varepsilon$$

implies that

Where

PP are production parameters,

PP' are slightly varying production parameters,

$Q_{\varphi ktbHD}$ are quantities produced per phase $\varphi$, per well k, per layer (or group of layers) b and per time t, found in history data HD,

$Q_{\varphi ktbHD}'$ are slightly varying quantities produced per phase $\varphi$, per well k, per layer (or group of layers) b and per time t, found in a slightly varying history data,

$Q_{\varphi ktb}$ are quantities produced per phase $\varphi$, per well k, per layer (or group of layers) b and per time t, determined by the production simulator 2,

$Q_{\varphi ktb}'$ are quantities produced per phase $\varphi$, per well k, per layer (or group of layers) b and per time t, determined by another close enough production simulator determined out of slightly varying history data,

$[T_0, T]$ is the time interval from time $T_0$ to time T, being respectively the initial and the last date for which history data (HD) is available,

[T, T+My] is the time interval comprising the M years after time T,

$\|Z\|_{[T_1,T_2]}$ denotes a norm of Z over time interval $[T_1,T_2]$,

$\varepsilon$ being a positive number small with respect to 1, and

n being a small integer lesser than 5.

The important value here is the ratio n between the input variation allowed $\varepsilon$, and the output variation n $\varepsilon$ obtained. The values of $\varepsilon$ = 0.05, n = 2 have been found satisfactory. A horizon of M = 3 years is also satisfactory when considering the accuracy objectives.

The norm used herein for comparison may be any one, for instance: least square or weighted least square.

The three described ways to check the Vapnik condition can be use either separately or concurrently.

As already mentioned, the heart of the present disclosure is the production simulator 2. Said production simulator 2 may use behavioral physics laws such as reservoir physics laws 6 and well physics laws 7 in order to be sufficiently precise to accurately match the history data HD. However the VC-dimension h of the space of solutions S must remain small enough so as to verify said Vapnik condition.

Two approaches are proposed here to reach such result. Both approaches comprise using physics laws and applying them to a reservoir model.

In a first approach, also called upscaling, both said reservoir model and physics laws start with detailed formulations that are gradually simplified/scaled by approximating when and where some homogeneity can be observed, until a stop condition is reached. Said condition is reached by upscaling a reservoir partition, rock properties *RP,* laws of reservoir physics 6 and laws of well physics 7 until said Vapnik condition is verified.

According to a second approach, also called downscaling, both said reservoir model and physics laws start with coarse formulations that are gradually complexified/scaled by detailing when and where some substantial variation can be observed, until a stop condition is reached. Said condition is reached by downscaling a reservoir partition, rock properties *RP,* laws of reservoir physics 6 and laws of well physics 7 will keeping said Vapnik condition verified, until the production simulator 2 matches history data HD.

Both approaches may be used alone separately or may be used alternately. For instance, one may upscale the geology from a fine model by merging parts, and then locally downscale back one sub-geology that cannot be matched, thus revealing a substantial change of properties inside.

At this step, whatever the approach used, the structure of the production simulator 2 is defined. However, said production simulator 2 depends on several parameters $\alpha$, that must be further trimmed in order for the production simulator 2 to be operative. Depending on parameters $\alpha$, several production simulators 2 may be candidate solutions. These several candidate solutions are checked against a forecast expected risk $R(\alpha)$ for each possible set of parameters $\alpha$ until finding the optimal set of parameters $\alpha$ minimizing said expected risk $R(\alpha)$.

According to figure 1, a reservoir G may be modeled by considering its geology, that is, the closure of the rock volume containing oil, and parting it using a reservoir partition.

When using an upscaling approach, a first fine partition may be defined by crossing x-y areas indexed by letter a, each e.g. comprising at least one well 11, and z areas indexed by letter b. In the example of figure 1, four such x-y areas (a=1...4) are used and five (b=1...5) l areas are used to initially part the reservoir G. The reservoir G is thus initially

$$G = \bigcup_{a=1}^{A}\bigcup_{b=1}^{B} G_{ab}$$

parted into elementary parts $G_{ab}$ such that    with $G_{ab} \cap G_{a'b'} = \varnothing$ for (a,b)≠(a',b') (two different parts are disjoined), where $a \in \{1...A\}$ describes a x-y area, and $b \in \{1...B\}$ describes a l layer.

Starting from this initial reservoir partition, said partition is upscaled by considering elementary parts $G_{ab}$, and gradually merging adjacent ones together when they exhibit homogeneous rock properties RP. The result is a new coarser partition, comprising sub-geologies $G_z$ where $z \in \{1...Z\}$. In figure 1, three such sub-geologies are shown. $G_1$ gathers $G_{11}$, $G_{12}$, $G_{13}$, $G_{14}$ and $G_{15}$, exhibiting a homogenous behavior. $G_2$ gathers $G_{21}$, $G_{22}$, $G_{23}$, $G_{24}$, $G_{25}$, $G_{31}$, $G_{32}$, $G_{33}$, $G_{34}$ and $G_{35}$. $G_3$ gathers $G_{31}$, $G_{32}$, $G_{33}$, $G_{34}$ and $G_{35}$. In real cases a sub-geology typically includes from 3 to 50 wells. Said upscaling of the geology partition is a first way to reduce the dimension h of the space of solutions S. The size of the space of solutions then depends on the number of geologies which is of an order of few units instead of over 100 000s cells as in a meshed prior art model.

When using a downscaling approach, the process starts from a coarse partition, e.g. composed of a single part corresponding to the whole reservoir G. Said coarse partition s then parte into sub-geologies $G_z$ where $z \in \{1...Z\}$ where and every time a substantial change of properties is present around the boundary between said sub-geologies. So doing, a homogeneous behavior may be expected in every sub-geology, while keeping the number of such sub-geologies as reduced as possible.

Rock properties RP comprises mainly the rock porosity, permeability *k* and relative permeability $k_{r\varphi z}$, used to

determine the dynamic of fluid through rock, but also other property such as net pay, heat capacity or conductivity, as relevant. Since the sub-geology becomes the new elementary volume unit, all of these rock properties *RP,* are considered to be fairly constant over a given sub-geology $G_z$.

When using a upscaling approach rock properties RP are homogenized over each sub-geology $G_z$, according

$$RP_z = \frac{1}{V_z} \iiint_{G_z} RP(x, y, z) dx dy dz$$

to averaging formula: , where $V_z$ is the volume of sub-geology $G_z$.

When instead using a downscaling approach, rocks properties (RP) are downscaled by defining new separate rock properties $RP_z$ over each new sub-geology ($G_z$) obtained by parting along a discontinuity.

With respect to figure 3, is now described in more details the content of production simulator 2. Said production simulator 2 module may be parted into two main modules 6, 7. A first module implements laws of reservoir physics 6. Given a set of production parameters PP, said module provides dynamic characteristics of the fluids across the reservoir, at least at the entrance of each well 11 and at each sub-geology b. Said dynamic characteristics are e.g. expressed as a velocity field.

Said laws of reservoir physics 6 are either upscaled or downscaled in such a way they apply with functioning parameters of the sub-geology $G_z$. Also, space and times scales associated with the sub-geology $G_z$ are determined in such a way that the associated space of solutions is consistent with the complexity of history data HD at the well level. For instance, if insufficient data richness is available on layer-related production (*m* too small), well production will be summed up, partially (some layers are grouped) or totally (all layers are grouped):

$$Q_{\varphi kt} = \sum_{b \in \{1...B\}} Q_{\varphi ktb}$$

In such instance, the production simulator 2 only describes production per well and not production per well and per layer (or group of layers).

The upscaling / downscaling process also applies to the laws. A variation in number and complexity of laws of physics and of well may be obtained by using more simple or instead more detailed behavior models and formulas. For instance Darcy's law is a simplification of the more general Navier-Stokes's law. The order of the formulas can also be changed either increased or decreased according to the Vapnik condition intended. Some parameters may either be constant or refined by a varying function of another parameter or variable. Depending on the way the field has been exploited so far, heat transfer can be considered or not, thus employing or disregarding heat transfer laws.

In a similar fashion, well transfer functions may sometimes be linearized or approximated around their functioning point.

Such concordance is to be considered on partial time intervals or on partial spatial areas of the hydrocarbon field in accordance with the richness (dimension m) of detail of data available in history data HD.

The laws of reservoir physics 6 are, in a known manner, derived from the (Navier)-Stokes equations of conservation of momentum and conservation of mass for a fluid, said fluid successively corresponding to phases, evolving in a rock modeled as a porous medium only characterized by its averaged porosity $\Phi$, permeability $k$ and relative permeability $k_{r\varphi z}$.

Usual laws of reservoir physics 6 are derived by using general flow model such as the Navier-Stokes equations coupled with multiphase transport considered at the microscopic scale. Fluids are evolving in a domain obtained as the complement of rock, which may contain a large variety of obstacle topologies and geometries. The upscaling/downscaling process consists in determining the effective dynamics of fluids in the porous medium in which the rock structure is only described by the average porosity, permeability and relative permeability at a given time t.

Fluid propagation in the reservoir G is derived from the general Navier-Stokes equations, which describe

$$\rho \left( \frac{\partial u}{\partial t} + (u \cdot \nabla)u \right) = \nabla \cdot T + f$$

conservation of momentum for a fluid: where $u$ is the fluid velocity, $\rho$ is the fluid density, $T$ the stress tensor and f body forces acting on the fluid (for oil in a reservoir, f is the gravity: f = $\rho$ .g).

These are complemented by the conservation of fluid mass:

$$\frac{\partial \rho}{\partial t} + \nabla \cdot (\rho u) = 0$$

And for each phase $\varphi \in \{oil, water, gas\}$:

$$\frac{\partial(\rho S_\varphi)}{\partial t} + \nabla \cdot (\rho S_\varphi u) = \nabla \cdot J_\varphi$$

Where $S_\varphi$ denotes phase $\varphi$ saturation and $J_\phi$ diffusion flux. Of course, one has:

$$\sum_\varphi S_\varphi = 1 \text{ and } \sum_\varphi J_\varphi = 0$$

Since reservoir flows are usually characterized by small Reynolds numbers, i.e. creeping flows, the Navier-Stokes equations can generally be simplified into Stokes equations, assuming stationary, incompressible flow: $\mu\nabla^2 u_i + \rho g_i - \delta_i p = 0$ and $\nabla \cdot u = 0$ where $\mu$ is the viscosity, $u_i$ is the velocity in the $i$ direction, $g_i$ is the gravity component in direction $i$ and $p$ is the pressure.

Using a volume averaging procedure, the Stokes equations may be homogenized so that the effective viscous resisting force is proportional to the velocity, and opposite in direction. One may therefore write in the case of isotropic porous media

$$-\frac{\mu\Phi}{k} u_i + \rho g_i - \partial_i p = 0,$$

where k denotes the permeability of the porous medium and $\Phi$ is the porosity. This gives the velocity in terms of pressure gradient

$$u_i = -\frac{k}{\Phi\mu}(\partial_i p - \rho g_i),$$

which gives Darcy's law. In the case of anisotropic porous media, one ends up with

$$u_i = -\frac{1}{\Phi\mu}\sum_j K_{ij}(\partial_j p - \rho g_j),$$

where K denotes the symmetric permeability tensor and the sum is over the three directions j. The resulting equation of mass conservation of fluid is given by

$$\frac{\partial(\rho\Phi)}{\partial t} + \nabla \cdot (\rho u) = 0.$$

Actually, the fluid is generally made of gas (g), oil (o) and water (w), whose composition might be complex, depending for instance on their salinity and hydrocarbon chains. Mass conservation of phase $\varphi \in \{o,w,g\}$ at the upscaled level may be written as:

$$\frac{\partial(\rho_\varphi S_\varphi \Phi)}{\partial t} + \nabla \cdot (\rho_\varphi u_\varphi) = 0$$

where $u_\varphi, \rho_\varphi, S_\varphi$ respectively denote the velocity, density, saturation and diffusion flux of phase $\varphi$.

In any case, one has to determine closure laws for phase velocity $u_\varphi$ in terms of average flow characteristics like velocity $u$ and pressure $p$ and phase $\varphi$ saturation. Consistency relations have to be satisfied such as

$$\sum_\varphi S_\varphi = 1.$$

Closure of phase $\varphi$ velocity involves the so-called relative permeability coefficient $k_{r\phi}$ accounting for differential mobility of phases

$$u_{\varphi k} = -\frac{k}{\Phi\mu_\varphi} k_{r\varphi}\left(\nabla P_\varphi - \rho_\varphi g\right)$$

where $\mu_\varphi$ denotes the viscosity of phase $\varphi$.

Finally module 6 implements the laws of reservoir physics by following formulas:

$$u_{\varphi k z} = -\frac{k}{\Phi\mu_{\varphi z}} k_{r\varphi z}\left(\nabla P_{\varphi z} - \rho_{\varphi z} g\right),$$

where:

$u_{\varphi k z}$ is the velocity of phase $\varphi$ at well k, in sub-geology z,
$\mu_{\varphi z}$ is the viscosity of phase $\varphi$, in sub-geology z,
$\rho_{\varphi z}$ is the density of phase $\varphi$, in sub-geology z,
$P_{\varphi z}$ is the pressure of phase $\varphi$, in sub-geology z,
g is the gravity vector,
k is a permeability coefficient, and
$k_{r\varphi z}$ is a relative permeability coefficient of phase $\varphi$, in sub-geology z.

The laws of reservoir physics 6 may also comprise, if corresponding data are available in history data HD, heat transfer laws between a fluid or a gas and a rock given by the following formulas:

$$\Phi\partial_t\left(\rho_w S_w + \rho_g S_g\right) + \nabla\cdot\left(\rho_w u_w + \rho_g u_g\right) = 0$$

$$\Phi\partial_t\left(\rho_o S_o\right) + \nabla\cdot\left(\rho_o u_o\right) = 0,$$

$$S_o + S_w + S_g = 1,$$

$$\partial_t\left(E_s + E_f\right) + \nabla\cdot\left(U_f - \lambda(T)\nabla T\right) = 0,$$

where

$T = T(x,y,z)$ is the temperature and can vary over the reservoir,

$\Phi$ is the rock porosity,
$S_\varphi$ is the saturation of phase $\varphi$,
$\rho_\varphi$ is the density of phase $\varphi$,
$u_\varphi$ is the velocity of phase $\varphi$,
E is the volumetric internal energy (indexes s and f corresponding respectively to solid and fluid phases),
$U_f = U_g + U_o + U_w$ is the enthalpy flux, where $U_\varphi = \rho_\varphi h_\varphi u_\varphi$,

$h_\varphi$ is the specific enthalpy of phase $\varphi$,
$h_g = h_w + \Lambda$, $\Lambda$ being the specific heat of water vaporization,
g, w, o indexes being respectively for gas, water and oil,
$\lambda(T)$ is the reservoir conductivity coefficient.

Additionally, some variables in the production simulator 2 may be constant or may be detailed by considering them as variables e.g. of local pressure P and the local temperature T. So the laws of reservoir physics 6 may further comprise phase laws given by:

$\mu_{\varphi z} = \mu_{\varphi z}(P,T)$ the viscosity of phase $\varphi$ at sub-geology z, function of the local pressure $P$ and the local temperature $T$;

$\rho_{\varphi z} = \rho_{\varphi z}(P,T)$ the density of phase $\varphi$ at sub-geology z, function of the local pressure $P$ and the local temperature $T$;

$k_{r\varphi z} = k_{r\varphi z}(P,T)$ the relative permeability coefficient of phase $\varphi$ at sub-geology z, function of the local pressure $P$ and the local temperature $T$.

From said velocities $u_{\varphi kz}$, known at least at a perforation in layers of the sub-geology z of each well k, second module 7, implementing well models in the form of laws of well physics 7, determines the quantities produced $Q_{\varphi ktz}$ of phase $\varphi$ in sub-geology z, at well k at time t, in function of the production parameters $PP_{ktz}$ applied to each well k, in sub-geology z, at time t, and of the velocity $u_{\varphi kb}$ of phase $\varphi$ at layer b at well k, using formulas: $Q_{\varphi ktz} = T_{kz}(PP_{ktz}, u_{\varphi kz})$ where $T_{kz}$ is a transfer function defined for each well k and each sub-geology z. Such transfer functions are functions depending, inter alia, on local reservoir pressure, geology, skin effect, well/pump design and completion. They can vary over time, as a result of ageing or damage. They are usually tabulated functions, which are derived from past production data.

The space of solutions candidate for becoming a production simulator 2 of the hydrocarbon field, is the combination of T (well transfer physics) and u (propagation physics of the reservoir). Each such candidate is associated to and defined by a set of parameters $\alpha$. These parameters $\alpha$ are those defining the candidate simulator that will link input production parameters $PP_{ktz}$ to the quantities produced $Q_{\varphi ktz}$. The space of candidate simulators in which they are defined is the result of the upscaling/downscaling process of the reservoir, wells and laws. The simulator, defined by such parameters $\alpha$ will fully characterize the field behavior, well by well, sub-geology by sub-geology, as a response to given $PP_{ktz}$. These are valid for a given space of allowed values for input production parameters. Said space of allowed values is typically not greater than the envelope of all past production parameters, with an additional variation of +/- 30%.

Based on the history data HD, each production simulator candidate solution is compared against past data. The candidate solution whose set of parameters minimizes the forecast expected risk $R(\alpha)$ is determined by iteration over said sets of parameters $\alpha$.

In the case of mature fields, the amount $m$ of past production or history data HD is large enough to allow defining a space of solutions S embedding the appropriate physical richness able to capture all key phenomena that (have and) will matter for the future production of the same wells. Such situation allows a trade-off for which the VC-dimension $h$ of

$$\frac{h}{m}$$

space of solutions is suitable with respect to the complexity of available data, therefore minimizing the $\frac{h}{m}$ ratio and hence the $\Phi$ and the $R(\alpha)$ values. The forecast expected risk $R(\alpha)$ is minimized and the forecast provided by the production simulator 2 may be considered reliable.

For each candidate solution, the forecast expected risk $R(\alpha)$ is bounded from above using the Vapnik formula:

$$R(\alpha) \leq R_{emp}(\alpha) + \Phi\left(\frac{h}{m}, \delta\right)$$

$R(\alpha)$ is the forecast expected risk associated with parameters $\alpha$,
$R_{emp}(\alpha)$ is an empirical risk associated with parameters $\alpha$, determined by a matching process with history data HD,
$\delta$ is a positive number close to zero, 1-$\delta$ defining a probability that the inequality holds, and
$\Phi$ is a function defined by:

$$\Phi\left(\frac{h}{m}, \delta\right) = 2\sqrt{\frac{2}{m}\left(h\log\left(\frac{2em}{h}\right) + \log\left(\frac{2}{\delta}\right)\right)},$$

where
$h$ is the Vapnik-Chervonenkis dimension of the space of solutions, and
$m$ is the number of independent measures available in history data HD,
$e$ is equal to exp(1).

The best retained production simulator 2 is determined and defined by a set of optimal parameters $\alpha_{opt}$ that minimizes the forecast expected risk $R(\alpha)$.

Once a production simulator 2 is thus determined and optimized so as to respect the matching condition, the Vapnik condition and to minimize the forecast expected risk $R(\alpha)$, it can be used inside an optimizer 1. The optimizer 1 generates scenarios of production parameters $PP$ and applies the production simulator 2 over these scenarios. Many such runs are then iterated over different sets of production parameters $PP$. At each iteration, a gain value 5 is calculated derived from the quantity produced $Q_{\varphi ktz}$ forecast by production simulator 2. The resulting gain value 5 may be used to select the next scenario. So doing an optimal set of production parameters $PP$ can be obtained that optimize said gain value 5.

Said optimized gain value 5 can be a net present value $NPV$ or reserves $RES$ of the hydrocarbon field.

Any gain values 5 can be determined by module 4 from quantities produced $Q_{\varphi ktz}$ output by optimizer 1, by taking into account the necessary economic parameters or indexes, as is well known by the one skilled in the art.

Said net present value $NPV$ may e.g. be determined using the formula:

$$NPV = \sum_i \left( \sum_k \sum_z P_{kz} * (1 - R_{ik}) \right) * \frac{S_i}{(1+d)^i}$$

$$- \sum_i \left( \sum_k I_{ik} + \sum_k OC_{ik} + \sum_k \sum_z (TO_i * P_{kz} + TL_i * L_{kz}) \right) * \frac{1}{(1+d)^i}$$

where:

$P_{kz}$ is oil production (in barrels) for well k and sub-geology z,
$R_{ik}$ is tax and royalties for well k and year i,
$S_i$ is the oil sale price (per barrel) for year i,
$d$ is the percentage discount rate,
$I_{ik}$ is investment made on well k during year i,
$OC_{ik}$ is operating costs for well k during year i,
$L_{kz}$ is the liquid production (in barrels) for well k and sub-geology z,
$TO_i$ is treatment cost (per barrel of oil), for year i.
$TL_i$ is treatment cost (per barrel of liquid), for year i

An alternate choice is reserves $RES$ value of the hydrocarbon field, defined as the cumulative oil produced over a given time period. Others choices are possible.

PARALLEL PRODUCTION SIMULATOR

In the above, embodiments were described for building a reliable production simulator for a mature oil or natural gas field. The production simulator allows to model the behavior of the oil or natural gas field and to forecast produced quantities for a given scenario of production parameters. However, in practice, substantial variations in operation can be envisaged such that billions of billions of scenarios may exist. Traditional simulators, such as meshed-based or behavior-based simulators, iterate timewise on the model and as such require an excessive amount of computation time to run multiple scenarios associated with multiple hypotheses.

In the following, embodiments for implementing the production simulator described above to allow for running multiple scenarios in parallel are provided. The embodiments, as further described below, make use of vectorized computation hardware to provide a parallel production simulator over multiple scenarios. By leveraging the computation power of the vectorized computation hardware, multiple scenarios can be computed in the time that it takes to compute a single scenario in a state of the art simulator. Specifically, the production of the oil field is predicted, well by well, in parallel, for each scenario of the multiple scenarios. In an embodiment, the production parameters of the multiple scenarios are aligned in the memory of the vectorized computation hardware, which allows leveraging the hardware power to compute multiple scenarios in a single pass.

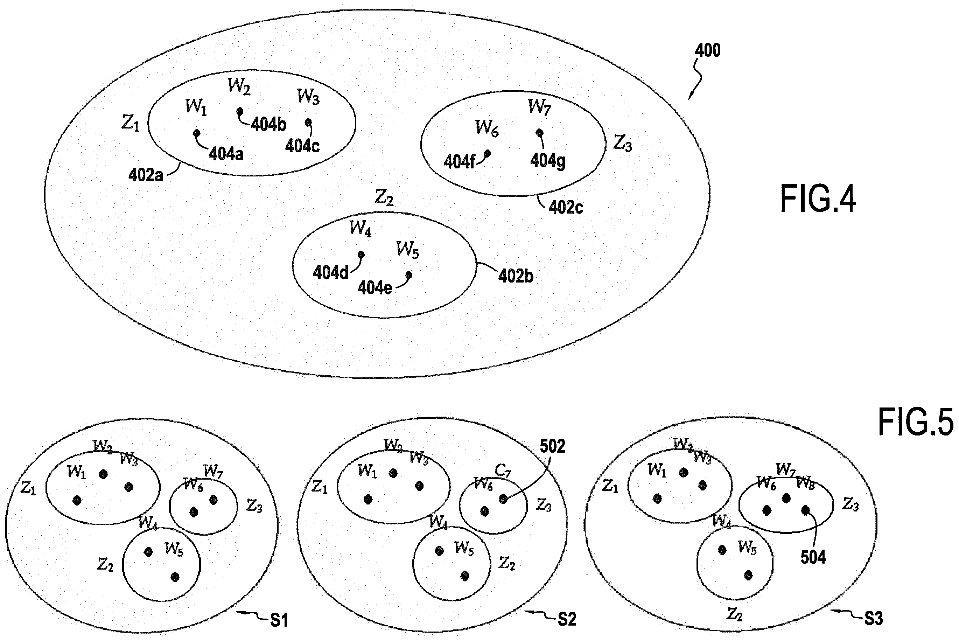

For the purpose of illustration, embodiments will be described with reference to an example oil field 400 illustrated in FIG. 4. However, as would be understood by a person of skilled in the art based on the teachings herein, embodiments are not limited to example oil field 400. As shown in FIG. 4, example oil field 400 includes a plurality of wells 404a-g (W1-W7). According to embodiments, wells 404a-g may include horizontal and vertical wells. In addition, alternatively or additionally, wells 404a-g may include, without limitation, field elements like perforations, multiple strings, or any controlled device that can affect production of the oil field.

According to embodiments, oil field 400 can form a single zone or can be divided into multiple zones. In the embodiment illustrated in FIG. 4, oil field 400 is divided into a plurality of zones 402a-c (Z1-Z3). Each well 404 of the plurality of wells 404a-g belongs to a respective zone 402 of the plurality of zones 402a-c. Specifically, wells 404a-c belong to zone 402a, wells 404d-e belong to zone 402b, and wells 404f-g belong to zone 402c. A zone may defined as an arbitrary group of wells, a physical region of the oil field, an administrative partition of the oil field, a vertical separation of layers, a part of the oil field separated by a fault from other parts, a surface installation, a sub-geology or a local region exhibiting a specific behavior. A zone may be independent or connected to other zones of the oil field. For example, in example oil field 400, zones 402a-c may or may not be connected to each other by having fluid transfer between them. Further, a zone may be divided into a number of subzones, which themselves may also contain subzones.

As noted above, embodiments enable scaling the production simulator described above to run multiple scenarios at the same time. A scenario according to embodiments is defined by a data set that includes production parameters of existing wells and, if any, the locations and production parameters of one or more new wells envisioned by the scenario. The scenario may also include production parameters of existing injectors and, if any, the locations and production parameters of new injectors. According to embodiments, the production parameters may include any measured or calculated data, such as, Tubing Head Pressure (THP), Bottom Hole Flowing Pressure (BHFP), well head pressure, gas lift rate, pump frequency, work-over, change of completion, etc., and for new wells, the drilling time or completion, for example.

Different scenarios can be tested using the production simulator according to embodiments. The scenarios are executed on the same model of the oil field, as generated by the production simulator, but using different production parameter data sets. For example and without limitation, scenarios for changing the current production parameters of the oil field, converting an existing producer to an injector, adding one or more new wells (producers, injectors, etc.), perforating into a new layer, and/or isolating an existing layer can be tested.

For the purpose of illustration, FIG. 5 shows example scenarios S1, S2, and S3 that may be tested for example oil field 400 discussed above with reference to FIG. 4. Scenario S1 describes operating oil field 400 with normal production parameters, for example, corresponding to current production parameters. Scenario S1 may be used as a baseline for evaluating other scenarios. Scenario S2 describes making a conversion 502 at well W7 of the oil field. For example, well W7 may be converted from a producer well to an injector well. Scenario S3 describes the addition of a new well 504 (W8) in the zone Z3 of the oil field.

For each scenario, as further described below, the production simulator predicts the production of the oil field, well by well, and in the case of a multilayered geology, by layer or group of layers. In an embodiment, for each scenario, the production simulator computes the quantities $Q_{\varphi ktz}$ - $f(PP)$ per phase $\varphi$ (oil, water, and gas), per well $\omega$ and per time step $t$ as a function of production parameters $PP$ corresponding to the scenario. In another embodiment, as discussed above, the computed quantities may be of the form $Q_{\varphi ktz}$, i.e., the quantities produced of phase $\varphi$ at well $k$ in sub-geology $z$ at time step $t$.

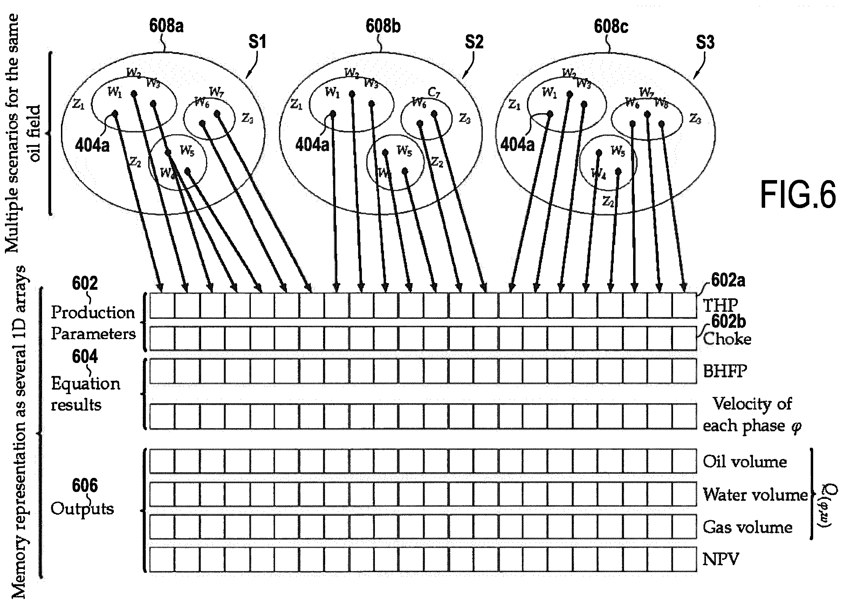

In an embodiment, to fully leverage the computation power of the vectorized computation hardware, the simulation data is organized in memory to facilitate the simulation of multiple scenarios in parallel. This is illustrated, for example, in FIG. 6 which shows a memory representation of the scenarios S1, S2, and S3 described above. As shown, the simulation data is organized by data type (e.g., production parameter, equation result, output) with each data type being represented by a single one-dimensional array at each time step $t$ of the simulation. Each well of each scenario is assigned the same index in each of the one-dimensional arrays corresponding to the different data types.

At the beginning of the simulation (e.g., time step $t$=1), production parameter data sets 608a, 608b, and 608c corresponding respectively to the plurality of scenarios being tested are received. The production parameter data sets are aligned into corresponding one-dimensional arrays 602 formed in memory. For example, as shown in FIG. 6, the production parameter data set of each scenario S1, S2, and S3 may include any measured or calculated data, such as, a THP value and a Choke value for each well in the scenario. The production parameter data sets are aligned into a THP one-dimensional array 602a and a Choke one-dimensional array 602b. The THP/Choke one-dimensional array 602a/b includes the THP/Choke parameter value of each well of each scenario. A well that appears in multiple scenarios, such as well 404a for example, will be associated with multiple entries in the one-dimensional array, each entry corresponding to one of the multiple scenarios. The alignment of production parameter data sets into one-dimensional arrays as described above is performed repeatedly for each time step $t$ of the simulation.

In an embodiment, the one-dimensional array containing the production parameters for each scenario at each time step $t$ can be reduced to only include changes across time steps of said production parameter during the duration of the simulation. In another embodiment, the one-dimensional array containing the production parameters for each scenario is only created for time steps of the simulation that induce a change for the corresponding production parameter. This will reduce the memory taken by the simulation.

In an embodiment, the production parameter data sets are grouped per scenario when aligned in the one-dimensional arrays such that the production parameter data set values of a scenario occupy consecutive cells of the arrays. The starting cell index of each scenario is stored during the simulation.

In another embodiment, when a scenario includes new wells or zones, the same new wells or zones may be added to the other scenarios in order to match the scenario with the highest number of wells. The results of the new wells or zones are ignored for the other scenarios. This approach ensures that the production simulator works the same way for all wells without adding special case processing and branching (if-then-else for instance).

The actual locations of wells in memory may vary. For example, depending on the underlying hardware, wells of the same zone and/or scenario may be packed together for better memory locality or dispatched in different memory locations to enhance memory bandwidth and layout. Alternatively, wells of the same zone and/or scenario may be partitioned without memory locality, i.e., without them being stored physically near each other.

Intermediate/equation results (e.g., BHFP, phase velocities, etc.) and outputs (e.g., produced Oil, Water, and Gas volumes and NPV) of the simulation are organized in a similar fashion as the production parameters in one-dimensional arrays 604 and 606 respectively. Arrays 602, 604, and 606 have all the same size. In an embodiment, arrays 604 and 606 are generated in time step $t'= t+1$ based on the arrays 602 associated with time step $t$. In an embodiment, intermediate/equation results and outputs may be stored for each time step of the simulation.

In an embodiment, each well of each scenario is associated with the same index in each of the one-dimensional arrays 602, 604, and 606 (i.e., production parameters arrays, equation results arrays, and outputs arrays). For example, well 404a of the Scenario S1 is associated with the first cell in all of the one-dimensional arrays 602, 604, and 606. Accordingly, a given well of a given scenario can be readily assigned to a data pipeline (e.g., processing thread or lane) by associating its corresponding index with the data pipeline. In an embodiment, once the data is organized in the memory of the vectorized computation hardware, the production simulator is executed in parallel on all scenarios in memory assuming that the computing power is available.

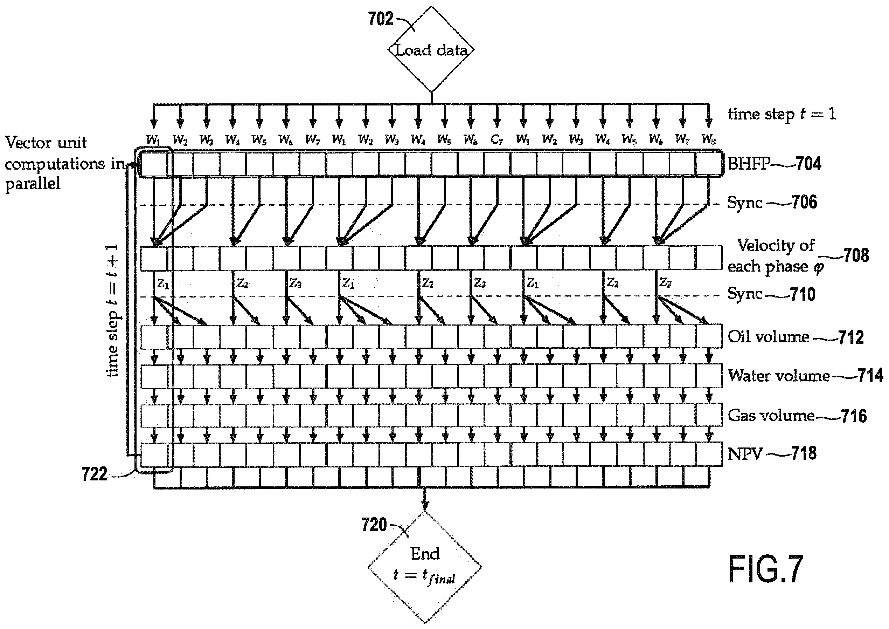

In an embodiment, illustrated in FIG. 7, the vectorized computation hardware supports Single Instruction, Multiple Threads (SIMT) processing. For example, the vectorized computation hardware may be a General-Purpose Graphics Processing Unit (GPGPU), i.e., a graphics processing unit that performs non-specialized functions typically performed on a Central Processing Unit (CPU). In this embodiment, each well of each scenario is assigned a thread of a plurality of available threads based on the cell index of each well.

Using this approach, the production simulator can be scaled up to the maximum number of threads that can be supported by the underlying hardware. Typically, the number of available threads is higher than or equal to the aggregate number of wells in the tested scenarios. If the aggregate number of wells is greater than the number of available threads, the vectorized computation hardware can be leveraged sequentially, testing as many scenarios as can be fitted in a single run and testing additional scenarios in subsequent runs.

As shown in FIG. 7, in a SIMT architecture, a simulation run begins in step 702, which includes, in the first step of the simulation, loading the data into the memory of the vectorized computation hardware. In an embodiment, step 702 includes receiving a plurality of production parameter data sets corresponding respectively to a plurality of scenarios. As discussed above, the plurality of scenarios each includes one or more zones and a set of wells of the oil field, and the plurality of production parameter data sets each includes one or more production parameter values for each well of the corresponding scenario. The one or more production parameter values may include, without limitation, for example, a Tubing Head Pressure (THP), a Choke value, and any other measured or calculated Production Parameter relevant to the model.

In an embodiment, step 702 may further include assigning each well of each scenario a cell index; and assigning each zone of each scenario a zone cell index. For example, with reference to FIG. 7, the well $W_1$ of the first scenario is assigned the index 0 as a cell index, and the well $W_2$ of the first scenario is assigned the index 1 as a cell index. The zone comprising the wells $W_1$ and $W_2$ in the first scenario is assigned the index 0 as a zone index. Accordingly, the zone cell index assigned to the zone is identical to the cell index assigned to the well $W_1$ but different than the cell index assigned to the well $W_2$. According to embodiments, the cell index assigned to a well may be based on or independent from a zone and/or a scenario comprising the well.

Subsequently, step 702 may further include aligning the plurality of production parameter data sets in at least a first one-dimensional array formed in the memory such that a production parameter value for each well of each scenario is stored in a respective cell of the first one-dimensional array, where the respective cell has an index equal to the cell index assigned to the well. For example, with reference to FIG. 6, the first one-dimensional array may be THP array 602a. Accordingly, in this example, the THP production parameter value for the well $W_1$ of the first scenario is stored in the cell of THP array 602a having the index 0, which is equal to the cell index assigned to the well $W_1$ of the first scenario.

Next, thread assignment is performed. Specifically, in an embodiment, the cell index, for each well of each scenario, is associated with a first thread of a plurality of thread; and the zone cell index, for each zone of each scenario, is associated with a second thread of the plurality of threads. The first thread may be identical to or different than the second thread. In the example of FIG. 7, the cell index assigned to the well $W_1$ of the first scenario is associated with a thread 722 of the plurality of threads. The zone cell index assigned to the zone comprising the well $W_1$ of the first scenario is also associated with thread 722 in this example, though it may be associated with a different thread of the plurality of threads.

Once the data has been loaded and thread assignment has been performed, an iteration of the simulation run is executed. In an embodiment, an iteration of the simulation run includes the steps 704, 706, 708, 710, 712, 714, 716, and 718 further described below. As would be understood by a person of skill in the art based on the teachings herein, these steps may be performed in a different order than shown in FIG. 7. For example, the order of steps 712, 714, and 716 may be different in another embodiment.

In each iteration, steps 704, 706, 708, 710, 712, 714, 716, and 718 are performed in parallel for each thread of the plurality of threads, i.e., for each well of each scenario. For the purpose of clarity, steps 704, 706, 708, 710, 712, 714, 716, and 718 are described below with respect to a given well of a given scenario.

In an embodiment, step 704 includes computing, using the first thread associated with the cell index assigned to the well, an intermediate result for the well based on the one or more production parameter values for the well. In an embodiment, the intermediate result includes a Bottom Hole Flowing Pressure (BHFP) at the well, computed according to the equation BHFP($w,t$) = F$_{(BHFP,w)}$(THP($w,t$),Choke($w,t$),Q($\varphi,w,t\text{-}1$)), where F$_{(BHFP,w)}$ is a function taking as input the production parameters THP and Choke and the quantity produced during the previous time step $t\text{-}1$ at the well $w,$ to forecast the local BHFP of well $w$ at time step $t$. In an embodiment, the intermediate result for the well is stored in a cell of a one-dimensional array having an index that is equal to the cell index assigned to the well.

Step 706 includes synchronizing the plurality of threads and dispatching the intermediate result, computed in step 704, to a cell of a second one-dimensional array, where the cell of the second one-dimensional array has an index equal to the zone cell index assigned to the zone comprising the well. For example, as shown in FIG. 7, the intermediate result associated with well W$_1$ (as well as the intermediate results associated with the wells W$_2$ and W$_3$ belonging to the same zone Z$_1$ in the first scenario) is dispatched to a cell of a second one-dimensional array 708 having an index (0) equal to the zone cell index assigned to the zone comprising the well W$_1$ in the first scenario.

Step 708 includes computing, using the second thread associated with the zone comprising the well, a zone-based intermediate result for the well based on the intermediate result of the well. In an embodiment, the zone-based intermediate result comprises one or more velocities of one of more phases for each well in the zone. In an embodiment, the velocity of a phase $\varphi$ in zone Z at time step $t$ is given by the equation:

$$u_{\varphi t} = -\frac{k}{\phi \mu_b} k_{r\varphi t} (\nabla P_\varphi - \rho_\varphi g)$$

where $\mu_b$ is the viscosity of phase $\varphi$, $\phi$ the rock porosity, $P_\varphi$ is the pressure of phase $\varphi$, $\rho_\varphi$ is the density of phase $\varphi$, $g$ is the gravity vector, $k$ is a permeability coefficient, and $k_{r\varphi}$ is a relative permeability coefficient of phase $\varphi$, at time step $t$ through its dependency on phase saturation. In an embodiment, step 708 further includes the computation of related intermediate zone-based parameters. In an embodiment, the computation in step 708 is done in parallel for all zones of each scenario. As noted above, the second thread may be identical to or different from the first thread associated with the cell index assigned to the well. In another embodiment, the second thread can be independent of any threads associated with any wells of the corresponding zone.

Step 710 includes synchronizing the plurality of threads and dispatching the zone-based intermediate result to a cell of a third one-dimensional array having an index equal to the cell index assigned to the well. For example, for the wells W$_1$, W$_2$, and W$_3$ of the first scenario, the zone-based intermediate result computed on the second thread associated with the zone comprising the wells (which, in this example, is identical to the first thread associated with the well W$_1$) is dispatched to respective cells (of the third one-dimensional array) having indices that correspond respectively to the cell indices assigned to the wells W1, W$_2$ and W$_3$ of the first scenario.

Subsequently, steps 712, 714, and 716 include computing, using the first thread, quantity results for the well based on the zone-based intermediate result computed in step 708 and/or the intermediate result computed in step 704. The quantity results computed in steps 712, 714, and 716 may be computed in parallel in an embodiment. In an embodiment, the quantity results comprise one or more volumes of one or more phases, produced at the well during the simulation time step. In an example embodiment, the quantities at the current time step t for each zone Z are given by the equation:

$$Q_{\varphi wt} = T_w (BHFP_{wt}, u_{\varphi t})$$

where $Q_{\varphi wt}$ is the quantity produced of phase $\varphi$ (Oil, Water, Gas) at well $w$ in zone Z at time step $t$, $T_w$ is a transfer function of well $w$ in zone Z, and $u_{\varphi wt}$ is the velocity of phase $\varphi$ at well w in zone Z at time step $t$.

In an embodiment, the simulation run optionally includes in step 718 calculating a Net Present Value (NPV) for each zone of each scenario based on the quantity results computed in steps 712, 714, and 716. In an embodiment, the NPV is computed as a running sum up to the current time step $t$ according to the equation:

$$NPV = \sum_t \left( \sum_w \sum_z P_{wzt} * (1 - R_{tw}) \right) * \frac{S_t}{(1+d)^t}$$

$$- \sum_t \left( \sum_w I_{tw} + \sum_w OC_{tw} + \sum_w \sum_z (TO_{tw} * P_{wzt} + TL_{tw} * L_{wzt}) \right) * \frac{1}{(1+d)^t}$$

where $P_{wzt}$ is the oil quantity (in barrel) produced at time step $t$ for well $w \in Z$, $R_{tw}$ is the tax and royalty at time step $t$ for well $w \in Z$ in %, $S_t$ is the oil sale price (per barrel) at time step $t$, $d$ is the percentage discount rate, $I_{tw}$ is the investment made at time step $t$ for well $w \in Z$, $OC_{tw}$ is the operating cost at time step $t$ for well $w \in Z$, $TO_{tw}$ is the treatment cost (per barrel of oil) at time step $t$ for well $w \in Z$, $TL_{tw}$ is the treatment cost (per barrel of liquid) at time step $t$ for well $w \in Z$, and $L_{wzt}$ is the liquid quantity (in barrel) produced at time step $t$ for well $w \in Z$.

At the end of each iteration, a check is made to determine if the simulation run final time step $t_{final}$ has been reached. If not, the current time step value is incremented by one and the above described process is repeated beginning at step 704. Otherwise, the simulation run is terminated in step 720. The produced quantities (Oil volume, Water volume, Gas volume, NPV) for each well of each scenario over the life of the simulation are output to the user.

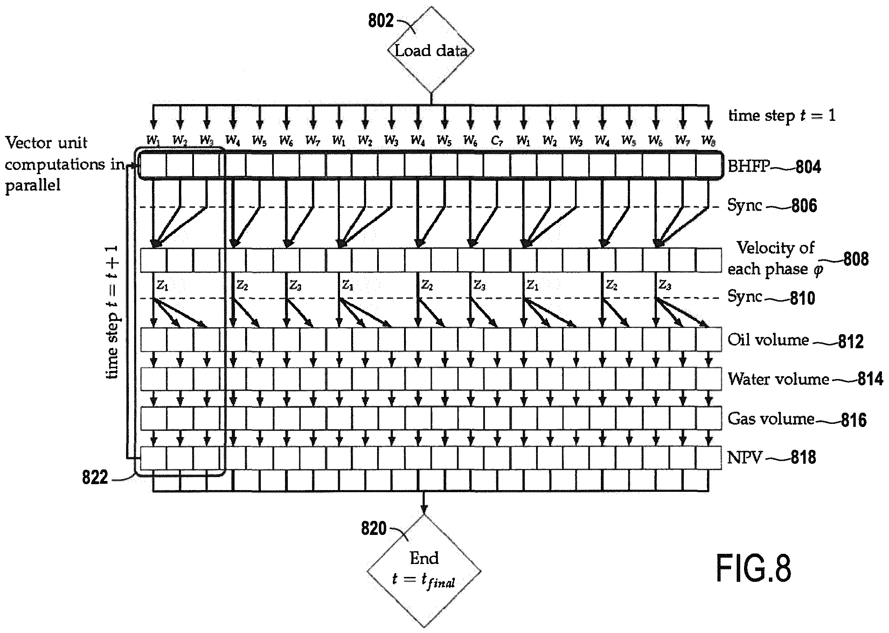

In another embodiment, illustrated in FIG. 8, the vectorized computation hardware supports Single Instruction, Multiple Data (SIMD) processing. For example, the vectorized computation hardware may be a multi-core processor capable of performing the same instruction on multiple data points simultaneously. In this embodiment, a group of wells corresponding to one or more scenarios are associated with a first data pipeline having a plurality of lanes, and each well of the group of wells is associated with a respective lane of the plurality of lanes of the first data pipeline. Further, a group of zones corresponding to one or more scenarios are associated with a second data pipeline having a plurality of lanes, and each zone of the group of zones is associated with a respective lane of the plurality of lanes of the second data pipeline.

In an embodiment, each lane of the plurality of lanes of the first or second data pipeline runs on a processor core (or logical core if it uses hyper threading) and makes use of SIMD instructions to parallelize data computation. In other words, vectorization takes place at the instruction level of the CPU.

As shown in FIG. 8, an SIMD simulation run process is similar to the SIMT process described above with reference to FIG. 7. However, where in SIMT a well is assigned to a thread based on their cell index, in SIMD, a group of wells corresponding to one or more scenarios are assigned to a data pipeline having a plurality of lanes. Within the data pipeline, multiple processing lanes are provided by virtue of the SIMD processing. Specifically, each individual well of the group of wells is assigned a SIMD lane within the data pipeline based on their cell index. For example, in FIG. 8, a data pipeline 822 is assigned to wells $W_1$, $W_2$, and $W_3$ of the first scenario, and each well is associated with a SIMD lane within data pipeline 822.

In an embodiment, the SIMD simulation run may include steps 802, 804, 806, 808, 810, 812, 814, 816, 818, and 820.

Step 802 is similar to step 702 of the SIMT process described above. In an embodiment, as in step 702, step 802 includes receiving a plurality of production parameter data sets corresponding respectively to a plurality of scenarios. Step 802 further includes assigning each well of each scenario a cell index; and assigning each zone of each scenario a zone cell index. The cell index assigned to a well may be identical to or different than a zone cell index assigned to a zone comprising the well. According to embodiments, the cell index assigned to a well may be based on or independent from a zone and/or a scenario comprising the well. Additionally, step 802 includes aligning the plurality of production parameter data sets in at least a first one-dimensional array formed in the memory such that a production parameter value for each well of each scenario is stored in a respective cell of the first one-dimensional array, where the respective cell has an index equal to the cell index assigned to the well.

In an embodiment, step 802 further includes associating groups of wells and groups of zones with data pipelines. Specifically, in an embodiment, step 802 includes associating contiguous cell indices, corresponding to a group of wells corresponding to one or more scenarios, with a first data pipeline having a plurality of lanes, where each cell index of the contiguous cell indices is associated with a respective lane of the plurality of lanes of the first data pipeline. For example, with reference to FIG. 8, the contiguous cell indices assigned to wells $W_1$ $W_2$, and $W_3$ of the first scenario are associated with a first data pipeline 822 having a plurality of lanes. Each cell index of the contiguous cell indices is associated with a respective lane of first data pipeline 822.

Step 802 also includes associating contiguous zone cell indices, corresponding to a group of zones corresponding to one or more scenarios, with a second data pipeline having a plurality of lanes, where each zone cell index of the contiguous zone cell indices is associated with a respective lane of the plurality of lanes of the second data pipeline.

In an embodiment, the first or second data pipeline is assigned to a thread of a plurality of threads.

Steps 804 through 816 are computed in parallel for each well of the group of wells. For the purpose of clarity, the steps are describe below with respect to a given well of a given group of wells. As would be understood by a person of skill in the art based on the teachings herein, the simulation may involve one or more groups of wells and one or more groups of zones.

Step 804 is similar to step 704 described above except that the computation of the intermediate result is performed using the lane of the first data pipeline associated with the well, instead of a thread associated with the well.

Step 806 is similar to step 706 of the SIMT process, in that it includes dispatching the intermediate result to a cell of a second one-dimensional array having an index equal to the zone cell index assigned to the zone comprising the well. In an embodiment, the synchronization in step 806 may be optional if the size of a SIMD register is higher than or equal to the number of wells in the simulated scenarios.

Step 808 is similar to step 708 described above, except that the computation of the zone-based intermediate result is performed using the respective lane of the second data pipeline corresponding to the zone comprising the well, instead of a thread associated with the zone. As noted above, the second data pipeline may be identical to or different than the first data pipeline.

Step 810 is identical to step 710 of the SIMT process, except that the synchronization may be optional in the SIMD process if the size of a SIMD register is higher than or equal to the number of wells in the simulated scenarios.

Steps 812, 814, 816, and 818 are similar to steps 712, 714, 716, and 718 respectively, except that the computations are performed on the respective lane of the first data pipeline associated with the well, instead of a thread associated with the well. Finally, step 820 is identical to step 720 described above with respect to the SIMT process.

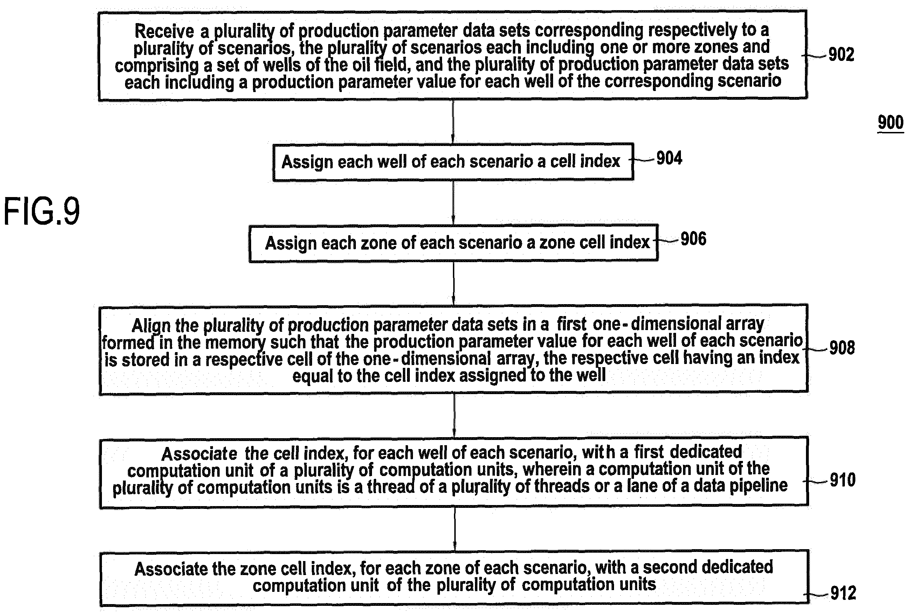

FIG. 9 illustrates an example process 900 for simulating the production of an oil field according to an embodiment. Example process 900 is provided for the purpose of illustration only and is not limiting of embodiments. Process 900 may be performed by a vectorized computation hardware such as an SIMT or SIMD processor.

As shown in FIG. 9, process 900 begins in step 902, which includes receiving a plurality of production parameter data sets corresponding respectively to a plurality of scenarios, where each of the plurality of scenarios includes one or more zones and a set of wells of the oil field and the plurality of production parameter data sets each includes a production parameter value for each well of the corresponding scenario. The production parameter value may include, without limitation, a THP, a Choke value, any other relevant measured or calculated production parameters, and/or a previous time step quantity result associated with the well.

In step 904, process 900 includes assigning each well of each scenario a cell index.

In step 906, process 900 includes assigning each zone of each scenario a zone cell index.

Subsequently, in step 908, process 900 includes aligning the plurality of production parameter data sets in a first one-dimensional array formed in the memory such that the production parameter value for each well of each scenario is stored in a respective cell of the first one-dimensional array, the respective cell having an index equal to the cell index assigned to the well. In an embodiment, the first one-dimensional array is formed in a memory of the vectorized computation hardware.

Next, in step 910, process 900 includes associating the cell index, for each well of each scenario with a first dedicated computation unit of a plurality of computation units. In embodiments, the computation unit may be a thread of a plurality of threads in the case of a SIMT architecture or a lane of a multi-lane data pipeline in the case of a SIMD architecture.

Process 900 terminates in step 912, which includes associating the zone cell index, for each zone of each scenario, with a second dedicated computation unit of the plurality of computation units.

In an embodiment, process 900 may further include in parallel, for each well of each scenario, computing an intermediate result for the well based on the production parameter value for the well; computing a zone-based intermediate result for the well based on previous results computed for each well of the zone comprising the well; and computing a quantity result for the well based on the zone-based intermediate result. The zone-based intermediate result may comprise one or more velocities of one or more phases at the well. The quantity result may comprise one or more volumes of one or more phases, produced at the well during a simulation time step.

EXAMPLE COMPUTER SYSTEM

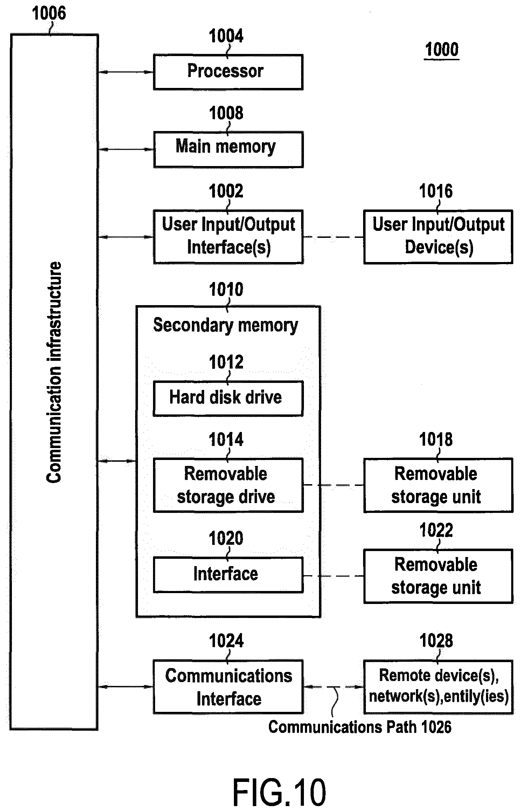

Various embodiments can be implemented, for example, using one or more computer systems, such as computer system 1000 shown in FIG. 10.

Computer system 1000 includes one or more processors (also called central processing units, or CPUs), such as a processor 1004. Processor 1004 is connected to a communication infrastructure or bus 1006.

One or more processors 1004 may each be a graphics processing unit (GPU). In an embodiment, a GPU is a processor that is a specialized electronic circuit designed to rapidly process mathematically intensive applications on electronic devices. The GPU may have a highly parallel structure that is efficient for parallel processing of large blocks of data, such as mathematically intensive data common to computer graphics applications, images and videos. In an embodiment, each of the one or more processors 1004 may implement an SIMT or an SIMD architecture.

Computer system 1000 also includes user input/output device(s) 1016, such as monitors, keyboards, pointing devices, etc., which communicate with communication infrastructure 1006 through user input/output interface(s) 1002.

Computer system 1000 also includes a main or primary memory 1008, such as random access memory (RAM). Main memory 1008 may include one or more levels of cache. Main memory 1008 has stored therein control logic (i.e., computer software) and/or data that when executed by the one or more processors 1008 perform the above described embodiments, including the processes described in FIGs. 7-9.

Computer system 1000 may also include one or more secondary storage devices or memory 1010. Secondary memory 1010 may include, for example, a hard disk drive 1012 and/or a removable storage device or drive 1014. Removable storage drive 1014 may be a floppy disk drive, a magnetic tape drive, a compact disk drive, an optical storage device, a tape backup device, and/or any other storage device/drive.

Removable storage drive 1014 may interact with a removable storage unit 1018. Removable storage unit 1018 includes a computer usable or readable storage device having stored thereon computer software (control logic) and/or data. Removable storage unit 1018 may be a floppy disk, magnetic tape, compact disk, DVD, optical storage disk, and/any other computer data storage device. Removable storage drive 1014 reads from and/or writes to removable storage unit 1018 in a well-known manner.

According to an exemplary embodiment, secondary memory 1010 may include other means, instrumentalities or other approaches for allowing computer programs and/or other instructions and/or data to be accessed by computer system 1000. Such means, instrumentalities or other approaches may include, for example, a removable storage unit 1022 and an interface 1020. Examples of the removable storage unit 1022 and the interface 1020 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1000 may further include a communications or network interface 1024. Communications interface 1024 enables computer system 1000 to communicate and interact with any combination of remote devices, remote networks, remote entities, etc. (individually and collectively referenced by reference number 1028). For example, communications interface 1024 may allow computer system 1000 to communicate with remote devices 1028 over a communications path 1026, which may be wired and/or wireless, and which may include any combination of LANs, WANs, the Internet, etc. Control logic and/or data may be transmitted to and from computer system 1000 via communication path 1026.

In an embodiment, a tangible apparatus or article of manufacture comprising a tangible computer useable or readable medium having control logic (software) stored thereon is also referred to herein as a computer program product or program storage device. This includes, but is not limited to, computer system 1000, main memory 1008, secondary memory 1010, and removable storage units 1018 and 1022, as well as tangible articles of manufacture embodying any combination of the foregoing. Such control logic, when executed by one or more data processing devices (such as computer system 1000), causes such data processing devices to operate as described herein.

Based on the teachings contained in this disclosure, it will be apparent to persons skilled in the relevant art(s) how to make and use the invention using data processing devices, computer systems and/or computer architectures other than that shown in FIG. 10.

CONCLUSION

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. It is to be understood that the phraseology or terminology herein is for the purpose of description and not of limitation, such that the terminology or phraseology of the present specification is to be interpreted by the skilled artisan in light of the teachings and guidance.

The breadth and scope of embodiments of the present disclosure should not be limited by any of the above-described exemplary embodiments, but should be defined only in accordance with the following claims.

**Claims**

1. A parallel production simulator for forecasting quantities produced vs determined production parameters that optimize a gain value of a mature oil field when applying the determined production parameters to exploit said oil field, comprising:

   a Single Instruction, Multiple Thread, SIMT, processor; and

a memory coupled to the processor,
wherein the processor is configured to:

receive a plurality of production parameter data sets corresponding respectively to a plurality of scenarios, the plurality of scenarios each including one or more zones and comprising a set of wells of the oil field, and the plurality of production parameter data sets each including a production parameter value for each well of the corresponding scenario;
assign each well of each scenario a cell index;
assign each zone of each scenario a zone cell index;
align the plurality of production parameter data sets in a first one-dimensional array formed in the memory such that the production parameter value for each well of each scenario is stored in a respective cell of the first one-dimensional array, the respective cell having an index equal to the cell index assigned to the well;
associate the cell index, for each well of each scenario, with a first thread of a plurality of threads;
associate the zone cell index, for each zone of each scenario, with a second thread of the plurality of threads; and
in parallel, for each well of each scenario,

compute, using the first thread associated with the corresponding cell index, an intermediate result for the well based on the production parameter value for the well;
dispatch the intermediate result to a cell of a second one-dimensional array, the cell of the second one-dimensional array having an index equal to the zone cell index assigned to the zone comprising the well;
compute, using the second thread associated with the zone comprising the well, a zone-based intermediate result for the well based on the intermediate result;
dispatch the zone-based intermediate result to a cell of a third one-dimensional array, the cell of the third one-dimensional array having an index equal to the cell index assigned to the well; and
compute, using the first thread, a quantity result for the well based on the zone-based intermediate result.

2. The parallel production simulator of claim 1, wherein the production parameter value includes a Tubing Head Pressure, THP, or a Choke value.

3. The parallel production simulator of claim 1, wherein the intermediate result comprises a Bottom Hole Flowing Pressure, BHFP, at the well.

4. The parallel production simulator of claim 1, wherein the zone-based intermediate result comprises one or more velocities of one of more phases at the well.

5. The parallel production simulator of claim 1, wherein the quantity result comprises one or more volumes of one or more phases, produced at the well during a simulation time step.

6. The parallel production simulator of claim 1, wherein the zone cell index for a zone comprising the well is identical or different than the cell index assigned to the well.

7. The parallel production simulator of claim 1, wherein the first thread is identical to or different than the second thread.

8. The parallel production simulator of claim 1, wherein the processor is further configured to synchronize the plurality of threads before dispatching the intermediate result to the cell of the second one-dimensional array.

9. The parallel production simulator of claim 1, wherein the processor is further configured to synchronize the plurality of threads before dispatching the zone-based intermediate result to the cell of the third one-dimensional array.

10. The parallel production simulator of claim 1, wherein the cell index assigned to the well is based on or independent from a zone and/or a scenario of the well.

11. The parallel production simulator of claim 1, wherein the processor is further configured, in parallel for each well of each scenario, to compute, using the first thread, a Net Present Value, NPV, result for the well based on the quantity result of the well.

12. A parallel production simulator for forecasting quantities produced vs determined production parameters that optimize a gain value of a mature oil field when applying the determined production parameters to exploit said oil field, comprising:

a Single Instruction, Multiple Data, SIMD, processor; and
a memory coupled to the processor,
wherein the processor is configured to:

receive a plurality of production parameter data sets corresponding respectively to a plurality of scenarios, the plurality of scenarios each including one or more zones and comprising a set of wells of the oil field, and the plurality of production parameter data sets each including a production parameter value for each well of the corresponding scenario;
assign each well of each scenario a cell index;
assign each zone of each scenario a zone cell index;
align the plurality of production parameter data sets in a first one-dimensional array formed in the memory such that the production parameter value for each well of each scenario is stored in a respective cell of the one-dimensional array, the respective cell having an index equal to the cell index assigned to the well;
associate contiguous cell indices, corresponding to a group of wells corresponding to one or more scenarios, with a first data pipeline having a plurality of lanes, wherein each cell index of the contiguous cell indices is associated with a respective lane of the plurality of lanes of the first data pipeline;
associate contiguous zone cell indices, corresponding to a group of zones corresponding to one or more scenarios, with a second data pipeline having a plurality of lanes, wherein each zone cell index of the contiguous zone cell indices is associated with a respective lane of the plurality of lanes of the second data pipeline; and
in parallel, for each well of the group of wells,

compute, using the respective lane of the first data pipeline, an intermediate result for the well based on the production parameter value for the well;
dispatch the intermediate result to a cell of a second one-dimensional array, the cell of the second one-dimensional array having an index equal to the zone cell index assigned to the zone comprising the well;
compute, using the respective lane of the second data pipeline corresponding to the zone comprising the well, a zone-based intermediate result for the well based on the intermediate result;
dispatch the zone-based intermediate result to a cell of a third one-dimensional array, the cell of the third one-dimensional array having an index equal to the cell index assigned to the well; and
compute, using the respective lane of the first data pipeline, a quantity result for the well based on the zone-based intermediate result.

13. The parallel production simulator of claim 12, wherein the production parameter value includes a Tubing Head Pressure, THP, or a Choke value.

14. The parallel production simulator of claim 12, wherein the intermediate result comprises a Bottom Hole Flowing Pressure, BHFP, at the well.

15. The parallel production simulator of claim 12, wherein the zone-based intermediate result comprises one or more velocities of one of more phases at the well.

16. The parallel production simulator of claim 12, wherein the quantity result comprises one or more volumes of one or more phases, produced at the well during a simulation time step.

17. The parallel production simulator of claim 12, wherein the zone cell index for a zone comprising the well is identical or different than the cell index assigned to the well.

18. The parallel production simulator of claim 12, wherein the first data pipeline is identical to or different than the second data pipeline.

19. The parallel production simulator of claim 12, wherein the processor is further configured, in parallel for each well of the group of wells, to compute, using the respective lane of the first data pipeline, a Net Present Value, NPV, result for the well based on the quantity result of the well.

20. The parallel production simulator of claim 12, wherein the first or second data pipeline is assigned to a thread of a plurality of threads.

21. A method (900) for a parallel production simulator for forecasting quantities produced vs determined production parameters that optimize a gain value of a mature oil field when applying the determined production parameters to exploit said oil field, comprising:

receiving a plurality of production parameter data sets corresponding respectively to a plurality of scenarios, the plurality of scenarios each including one or more zones and comprising a set of wells of the oil field, and the plurality of production parameter data sets each including a production parameter value for each well of the corresponding scenario;
assigning each well of each scenario a cell index;
assigning each zone of each scenario a zone cell index;
aligning the plurality of production parameter data sets in a first one-dimensional array formed in the memory such that the production parameter value for each well of each scenario is stored in a respective cell of the one-dimensional array, the respective cell having an index equal to the cell index assigned to the well;
associating the cell index, for each well of each scenario, with a first dedicated computation unit of a plurality of computation units, wherein a computation unit of the plurality of computation units is a thread of a plurality of threads of a Single Instruction, Multiple Thread, SIMT, processor of the parallel production simulator or a lane of a data pipeline of a Single Instruction, Multiple Data, SIMD, processor of the parallel production simulator;
associating the zone cell index, for each zone of each scenario, with a second dedicated computation unit of the plurality of computation units; and
in parallel, for each well of each scenario,

computing an intermediate result for the well based on the production parameter value for the well;
computing a zone-based intermediate result for the well based on previous results computed for each well of the zone; and
computing a quantity result for the well based on the zone-based intermediate result.

**Patentansprüche**

1. Paralleler Produktionssimulator zum Vorhersagen von Produktionsmengen abhängig von bestimmten Produktionsparametern, die einen Ertragswert eines reifen Ölfelds optimieren, wenn die bestimmten Produktionsparameter zum Erschließen des Ölfelds angewendet werden, umfassend:

einen Prozessor für Einzelanweisung, mehrere Threads, SIMT; und
einen Speicher, der mit dem Prozessor gekoppelt ist,
wobei der Prozessor zu Folgendem konfiguriert ist:

Empfangen einer Vielzahl von Produktionsparameter-Datensätzen, die jeweils einer Vielzahl von Szenarien entsprechen, wobei die Vielzahl von Szenarien jeweils eine oder mehrere Zonen beinhalten und einen Satz von Bohrlöchern des Ölfelds umfassen, und die Vielzahl von Produktionsparameter-Datensätzen jeweils einen Produktionsparameterwert für jedes Bohrloch des entsprechenden Szenarios beinhalten;
Zuweisen eines Zellenindex zu jedem Bohrloch;
Zuweisen eines Zonenzellenindex zu jeder Zone von jedem Szenario;
Ausrichten der Vielzahl von Produktionsparameter-Datensätzen in einem ersten eindimensionalen Array, das in dem Speicher gebildet wird, sodass der Produktionsparameterwert für jedes Bohrloch von jedem Szenario in einer jeweiligen Zelle des ersten eindimensionalen Arrays gespeichert wird, wobei die jeweilige Zelle einen Index aufweist, der gleich wie der Zellenindex ist, der dem Bohrloch zugewiesen wird;
Assoziieren des Zellenindex für jedes Bohrloch von jedem Szenario mit einem ersten Thread aus einer Vielzahl von Threads;
Assoziieren des Zonenzellenindex für jede Zone von jedem Szenario mit einem zweiten Thread aus der Vielzahl von Threads; und
parallel für jedes Bohrloch von jedem Szenarios
Berechnen, unter Verwendung des ersten Threads, der mit dem entsprechenden Zellenindex assoziiert ist, eines Zwischenresultats für das Bohrloch basierend auf dem Produktionsparameterwert für das Bohrloch;

Versenden des Zwischenresultats an eine Zelle eines zweiten eindimensionalen Arrays, wobei die Zelle des zweiten eindimensionalen Arrays einen Index aufweist, der gleich wie der Zonenzellenindex ist, der der Zone zugewiesen ist, die das Bohrloch umfasst;

Berechnen, unter Verwendung des zweiten Threads, der mit der das Bohrloch umfassenden Zone assoziiert ist, eines zonenbasierten Zwischenresultats für das Bohrloch basierend auf dem Zwischenresultat;

Versenden des zonenbasierten Zwischenresultats an eine Zelle eines dritten eindimensionalen Arrays, wobei die Zelle des dritten eindimensionalen Arrays einen Index aufweist, der gleich wie der Zellenindex ist, der dem Bohrloch zugewiesen wird; und

Berechnen, unter Verwendung des ersten Threads, eines Mengenresultat für das Bohrloch basierend auf dem zonenbasierten Zwischenresultat.

2. Paralleler Produktionssimulator nach Anspruch 1, wobei der Produktionsparameterwert einen Wert für Rohrkopfdruck, THP, oder Drosselwert beinhaltet.

3. Paralleler Produktionssimulator nach Anspruch 1, wobei das Zwischenresultat einen Bohrlochfließdruck, BHFP, an dem Bohrloch umfasst.

4. Paralleler Produktionssimulator nach Anspruch 1, wobei das zonenbasierte Zwischenresultat eine oder mehrere Geschwindigkeiten von einer oder mehreren Phasen in dem Bohrloch umfasst.

5. Paralleler Produktionssimulator nach Anspruch 1, wobei das Mengenresultat ein oder mehrere Volumina einer oder mehrerer Phasen umfasst, die während eines Simulationszeitschritts in dem Bohrloch produziert werden.

6. Paralleler Produktionssimulator nach Anspruch 1, wobei der Zonenzellenindex für eine Zone, die das Bohrloch umfasst, identisch oder verschieden von dem Zellenindex ist, der dem Bohrloch zugewiesen wird.

7. Paralleler Produktionssimulator nach Anspruch 1, wobei der erste Thread mit dem zweiten Thread identisch oder davon verschieden ist.

8. Paralleler Produktionssimulator nach Anspruch 1, wobei der Prozessor ferner konfiguriert ist, um die Vielzahl von Threads zu synchronisieren, bevor er das Zwischenresultat an die Zelle des zweiten eindimensionalen Arrays versendet.

9. Paralleler Produktionssimulator nach Anspruch 1, wobei der Prozessor ferner konfiguriert ist, um die Vielzahl von Threads zu synchronisieren, bevor er das zonenbasierte Zwischenresultat an die Zelle des dritten eindimensionalen Arrays versendet.

10. Paralleler Produktionssimulator nach Anspruch 1, wobei der Zellenindex, der dem Bohrloch zugewiesen wird, auf einer Zone und/oder einem Szenario des Bohrlochs basiert oder davon unabhängig ist.

11. Paralleler Produktionssimulator nach Anspruch 1, wobei der Prozessor ferner konfiguriert ist, um parallel für jedes Bohrloch von jedem Szenario unter Verwendung des ersten Threads ein Resultat für Nettobarwert, NBW, für das Bohrloch basierend auf dem Mengenresultat des Bohrlochs zu berechnen.

12. Paralleler Produktionssimulator zum Vorhersagen von Produktionsmengen abhängig von bestimmten Produktionsparametern, die einen Ertragswert eines reifen Ölfelds optimieren, wenn die bestimmten Produktionsparameter zum Erschließen des Ölfelds angewendet werden, umfassend:

einen Prozessor für Einzelanweisung, mehrere Daten, SIMD und
einen Speicher, der mit dem Prozessor gekoppelt ist,
wobei der Prozessor zu Folgendem konfiguriert ist:

Empfangen einer Vielzahl von Produktionsparameter-Datensätzen, die jeweils einer Vielzahl von Szenarien entsprechen, wobei die Vielzahl von Szenarien jeweils eine oder mehrere Zonen beinhalten und einen Satz von Bohrlöchern des Ölfelds umfassen, und die Vielzahl von Produktionsparameter-Datensätzen jeweils einen Produktionsparameterwert für jedes Bohrloch des entsprechenden Szenarios beinhalten;
Zuweisen eines Zellenindex zu jedem Bohrloch;
Zuweisen eines Zonenzellenindex zu jeder Zone von jedem Szenario;

Ausrichten der Vielzahl von Produktionsparameter-Datensätzen in einem ersten eindimensionalen Array, das in dem Speicher gebildet wird, sodass der Produktionsparameterwert für jedes Bohrloch von jedem Szenario in einer jeweiligen Zelle des eindimensionalen Arrays gespeichert wird, wobei die jeweilige Zelle einen Index aufweist, der gleich wie der Zellenindex ist, der dem Bohrloch zugewiesen wird;

Assoziieren von zusammenhängenden Zellindizes, die einer Gruppe von Bohrlöchern entsprechen, die einem oder mehreren Szenarien entsprechen, mit einer ersten Datenpipeline, die eine Vielzahl von Bahnen aufweist, wobei jeder Zellenindex der zusammenhängenden Zellindizes mit einer jeweiligen Bahn der Vielzahl von Bahnen der ersten Datenpipeline assoziiert ist;

Assoziieren von zusammenhängenden Zonenzellenindizes, die einer Gruppe von Zonen entsprechen, die einem oder mehreren Szenarien entsprechen, mit einer zweiten Datenpipeline, die eine Vielzahl von Bahnen aufweist, wobei jeder Zonenzellenindex der zusammenhängenden Zonenzellenindizes mit einer jeweiligen Lane der Mehrzahl von Bahnen der zweiten Datenpipeline assoziiert ist; und

parallel für jedes Bohrloch der Gruppe von Bohrlöchern

Berechnen, unter Verwendung der jeweiligen Bahn der ersten Datenpipeline, eines Zwischenresultats für das Bohrloch basierend auf dem Produktionsparameterwert für das Bohrloch;

Versenden des Zwischenresultats an eine Zelle eines zweiten eindimensionalen Arrays, wobei die Zelle des zweiten eindimensionalen Arrays einen Index aufweist, der gleich wie der Zonenzellenindex ist, der der Zone zugewiesen ist, die das Bohrloch umfasst;

Berechnen, unter Verwendung der jeweiligen Bahn der zweiten Datenpipeline, die der Zone entspricht, die das Bohrloch umfasst, eines zonenbasierten Zwischenresultats für das Bohrloch basierend auf dem Zwischenresultat;

Versenden des zonenbasierten Zwischenresultats an eine Zelle eines dritten eindimensionalen Arrays, wobei die Zelle des dritten eindimensionalen Arrays einen Index aufweist, der gleich wie der Zellenindex ist, der dem Bohrloch zugewiesen wird; und

Berechnen, unter Verwendung der jeweiligen Bahn der ersten Datenpipeline, eines Mengenresultats für das Bohrloch basierend auf dem zonenbasierten Zwischenresultat.

13. Paralleler Produktionssimulator nach Anspruch 12, wobei der Produktionsparameterwert einen Wert für Rohrkopfdruck, THP, oder Drosselwert beinhaltet.

14. Paralleler Produktionssimulator nach Anspruch 12, wobei das Zwischenresultat einen Bohrlochfließdruck, BHFP, an dem Bohrloch umfasst.

15. Paralleler Produktionssimulator nach Anspruch 12, wobei das zonenbasierte Zwischenresultat eine oder mehrere Geschwindigkeiten von einer oder mehreren Phasen in dem Bohrloch umfasst.

16. Paralleler Produktionssimulator nach Anspruch 12, wobei das Mengenresultat ein oder mehrere Volumina einer oder mehrerer Phasen umfasst, die während eines Simulationszeitschritts in dem Bohrloch produziert werden.

17. Paralleler Produktionssimulator nach Anspruch 12, wobei der Zonenzellenindex für eine Zone, die das Bohrloch umfasst, identisch oder verschieden von dem Zellenindex ist, der dem Bohrloch zugewiesen wird.

18. Paralleler Produktionssimulator nach Anspruch 12, wobei die erste Datenpipeline mit der zweiten Datenpipeline identisch oder davon verschieden ist.

19. Paralleler Produktionssimulator nach Anspruch 12, wobei der Prozessor ferner konfiguriert ist, um parallel für jedes Bohrloch der Gruppe von Bohrlöchern unter Verwendung der ersten Bahn der Datenpipeline ein Resultat für Nettobarwert, NBW, für das Bohrloch basierend auf dem Mengenresultat des Bohrlochs zu berechnen.

20. Paralleler Produktionssimulator nach Anspruch 12, wobei die erste oder zweite Datenpipeline einem Thread einer Vielzahl von Threads zugewiesen ist.

21. Verfahren (900) für einen parallelen Produktionssimulator zum Vorhersagen von Produktionsmengen abhängig von bestimmten Produktionsparametern, die einen Ertragswert eines reifen Ölfelds optimieren, wenn die bestimmten Produktionsparameter zum Erschließen des Ölfelds angewendet werden, umfassend:

Empfangen einer Vielzahl von Produktionsparameter-Datensätzen, die jeweils einer Vielzahl von Szenarien entsprechen, wobei die Vielzahl von Szenarien jeweils eine oder mehrere Zonen beinhalten und einen Satz von Bohrlöchern des Ölfelds umfassen, und die Vielzahl von Produktionsparameter-Datensätzen jeweils einen Produktionsparameterwert für jedes Bohrloch des entsprechenden Szenarios beinhalten;

Zuweisen eines Zellenindex zu jedem Bohrloch;

Zuweisen eines Zonenzellenindex zu jeder Zone von jedem Szenario;

Ausrichten der Vielzahl von Produktionsparameter-Datensätzen in einem ersten eindimensionalen Array, das in dem Speicher gebildet wird, sodass der Produktionsparameterwert für jedes Bohrloch von jedem Szenario in einer jeweiligen Zelle des eindimensionalen Arrays gespeichert wird, wobei die jeweilige Zelle einen Index aufweist, der gleich wie der Zellenindex ist, der dem Bohrloch zugewiesen wird;

Assoziieren des Zellenindexes für jedes Bohrloch von jedem Szenario mit einer ersten dedizierten Berechnungseinheit einer Vielzahl von Berechnungseinheiten, wobei eine Berechnungseinheit der Vielzahl von Berechnungseinheiten ein Thread einer Vielzahl von Threads eines Prozessors für Einzelanweisung, mehrere Threads, SIMT, des parallelen Produktionssimulators oder eine Bahn einer Datenpipeline eines Prozessors für Einzelanweisung, mehrere Daten, SIMD, des parallelen Produktionssimulators ist;

Assoziieren des Zonenzellenindexes für jede Zone von jedem Szenario mit einer zweiten dedizierten Berechnungseinheit der Vielzahl von Berechnungseinheiten; und parallel dazu für jedes Bohrloch von jedem Szenario, Berechnen eines Zwischenresultats für das Bohrloch basierend auf dem Produktionsparameterwert für das Bohrloch;

Berechnen eines zonenbasierten Zwischenresultats für das Bohrloch basierend auf früheren Resultaten, die für jedes Bohrloch der Zone berechnet werden; und

Berechnen eines Mengenresultats für das Bohrloch basierend auf dem zonenbasierten Zwischenresultat.

**Revendications**

1. Simulateur de production parallèle pour prévoir des quantités produites en fonction de paramètres de production déterminés qui optimisent une valeur de gain d'un champ pétrolifère mature lors de l'application des paramètres de production déterminés pour exploiter ledit champ pétrolifère, comprenant :

un processeur à instruction unique, fils d'exécution multiples, SIMT ; et
une mémoire couplée au processeur,
dans lequel le processeur est configuré pour :

recevoir une pluralité d'ensembles de données de paramètres de production correspondant respectivement à une pluralité de scénarios, la pluralité de scénarios comprenant chacun une ou plusieurs zones et comprenant un ensemble de puits du champ pétrolifère, et la pluralité d'ensembles de données de paramètres de production comprenant chacun une valeur de paramètre de production pour chaque puits du scénario correspondant ;
attribuer à chaque puits de chaque scénario un indice de cellule ;
attribuer à chaque zone de chaque scénario un indice de cellule de zone ;
aligner la pluralité d'ensembles de données de paramètres de production dans un premier réseau unidimensionnel formé dans la mémoire de telle sorte que la valeur de paramètre de production pour chaque puits de chaque scénario est stockée dans une cellule respective du premier réseau unidimensionnel, la cellule respective ayant un indice égal à l'indice de cellule attribué au puits ;
associer l'indice de cellule, pour chaque puits de chaque scénario, à un premier fil d'exécution parmi une pluralité de fils d'exécution ;
associer l'indice de cellule de zone, pour chaque zone de chaque scénario, à un deuxième fil d'exécution de la pluralité de fils ; et
en parallèle, pour chaque puits de chaque scénario,

calculer, à l'aide du premier fil d'exécution associé à l'indice de cellule correspondant, un résultat intermédiaire pour le puits sur la base de la valeur de paramètre de production pour le puits ;
transmettre le résultat intermédiaire à une cellule d'un deuxième réseau unidimensionnel, la cellule du deuxième réseau unidimensionnel ayant un indice égal à l'indice de cellule de zone affecté à la zone comprenant le puits ;
calculer, à l'aide du deuxième fil d'exécution associé à la zone comprenant le puits, un résultat intermédiaire basé sur une zone pour le puits sur la base du résultat intermédiaire ;
transmettre le résultat intermédiaire basé sur une zone à une cellule d'un troisième réseau unidimensionnel, la cellule du troisième réseau unidimensionnel ayant un indice égal à l'indice de cellule attribué au puits ; et

calculer, à l'aide du premier fil d'exécution, un résultat de quantité pour le puits sur la base du résultat intermédiaire basé sur une zone.

2. Simulateur de production parallèle selon la revendication 1, dans lequel la valeur de paramètre de production comprend une pression de tête de tube, THP ou une valeur de rétrécissement.

3. Simulateur de production parallèle selon la revendication 1, dans lequel le résultat intermédiaire comprend une pression d'écoulement de fond de trou, BHFP, au niveau du puits.

4. Simulateur de production parallèle selon la revendication 1, dans lequel le résultat intermédiaire basé sur une zone comprend une ou plusieurs vitesses d'une ou plusieurs phases au niveau du puits.

5. Simulateur de production parallèle selon la revendication 1, dans lequel le résultat de quantité comprend un ou plusieurs volumes d'une ou plusieurs phases, produits au niveau du puits pendant un intervalle de simulation.

6. Simulateur de production parallèle selon la revendication 1, dans lequel l'indice de cellule de zone pour une zone comprenant le puits est identique ou différent de l'indice de cellule attribué au puits.

7. Simulateur de production parallèle selon la revendication 1, dans lequel le premier fil d'exécution est identique ou différent du deuxième fil d'exécution.

8. Simulateur de production parallèle selon la revendication 1, dans lequel le processeur est en outre configuré pour synchroniser la pluralité de fils d'exécution avant de transmettre le résultat intermédiaire à la cellule du deuxième réseau unidimensionnel.

9. Simulateur de production parallèle selon la revendication 1, dans lequel le processeur est en outre configuré pour synchroniser la pluralité de fils d'exécution avant de transmettre le résultat intermédiaire basé sur une zone à la cellule du troisième réseau unidimensionnel.

10. Simulateur de production parallèle selon la revendication 1, dans lequel l'indice de cellule attribué au puits est basé sur une zone et/ou un scénario du puits ou indépendant de ceux-ci.

11. Simulateur de production parallèle selon la revendication 1, dans lequel le processeur est en outre configuré, en parallèle pour chaque puits de chaque scénario, pour calculer, à l'aide du premier fil d'exécution, un résultat de valeur actualisée nette, NPV, pour le puits sur la base du résultat de quantité du puits.

12. Simulateur de production parallèle pour prévoir des quantités produites en fonction de paramètres de production déterminés qui optimisent une valeur de gain d'un champ pétrolifère mature lors de l'application des paramètres de production déterminés pour exploiter ledit champ pétrolifère, comprenant :

un processeur à instruction unique, données multiples, SIMD ; et
une mémoire couplée au processeur,
dans lequel le processeur est configuré pour :

recevoir une pluralité d'ensembles de données de paramètres de production correspondant respectivement à une pluralité de scénarios, la pluralité de scénarios comprenant chacun une ou plusieurs zones et comprenant un ensemble de puits du champ pétrolifère, et la pluralité d'ensembles de données de paramètres de production comprenant chacun une valeur de paramètre de production pour chaque puits du scénario correspondant ;
attribuer à chaque puits de chaque scénario un indice de cellule ;
attribuer à chaque zone de chaque scénario un indice de cellule de zone ;
aligner la pluralité d'ensembles de données de paramètres de production dans un premier réseau unidimensionnel formé dans la mémoire de telle sorte que la valeur de paramètre de production pour chaque puits de chaque scénario est stockée dans une cellule respective du réseau unidimensionnel, la cellule respective ayant un indice égal à l'indice de cellule attribué au puits ;
associer des indices de cellules contiguës, correspondant à un groupe de puits correspondant à un ou plusieurs scénarios, à un premier pipeline de données ayant une pluralité de voies, chaque indice de cellule parmi les indices de cellules contigus étant associé à une voie respective de la pluralité de voies du premier pipeline de données ;

associer des indices de cellules de zone contiguës, correspondant à un groupe de zones correspondant à un ou plusieurs scénarios, à un deuxième pipeline de données ayant une pluralité de voies, chaque indice de cellule de zone parmi les indices de cellules de zone contiguës étant associé à une voie respective de la pluralité de voies du deuxième pipeline de données ; et

en parallèle, pour chaque puits du groupe de puits,

calculer, à l'aide de la voie respective du premier pipeline de données, un résultat intermédiaire pour le puits sur la base de la valeur de paramètre de production pour le puits ;

transmettre le résultat intermédiaire à une cellule d'un deuxième réseau unidimensionnel, la cellule du deuxième réseau unidimensionnel ayant un indice égal à l'indice de cellule de zone affecté à la zone comprenant le puits ;

calculer, à l'aide de la voie respective du deuxième pipeline de données correspondant à la zone comprenant le puits, un résultat intermédiaire basé sur une zone pour le puits sur la base du résultat intermédiaire ;

transmettre le résultat intermédiaire basé sur une zone à une cellule d'un troisième réseau unidimensionnel, la cellule du troisième réseau unidimensionnel ayant un indice égal à l'indice de cellule attribué au puits ; et

calculer, à l'aide de la voie respective du premier pipeline de données, un résultat de quantité pour le puits sur la base du résultat intermédiaire basé sur une zone.

13. Simulateur de production parallèle selon la revendication 12, dans lequel la valeur de paramètre de production comprend une pression de tête de tube, THP ou une valeur de rétrécissement.

14. Simulateur de production parallèle selon la revendication 12, dans lequel le résultat intermédiaire comprend une pression d'écoulement de fond de trou, BHFP, au niveau du puits.

15. Simulateur de production parallèle selon la revendication 12, dans lequel le résultat intermédiaire basé sur une zone comprend une ou plusieurs vitesses d'une ou plusieurs phases au niveau du puits.

16. Simulateur de production parallèle selon la revendication 12, dans lequel le résultat de quantité comprend un ou plusieurs volumes d'une ou plusieurs phases, produits au niveau du puits pendant un intervalle de simulation.

17. Simulateur de production parallèle selon la revendication 12, dans lequel l'indice de cellule de zone pour une zone comprenant le puits est identique ou différent de l'indice de cellule attribué au puits.

18. Simulateur de production parallèle selon la revendication 12, dans lequel le premier pipeline de données est identique au deuxième pipeline de données ou différent de celui-ci.

19. Simulateur de production parallèle selon la revendication 12, dans lequel le processeur est en outre configuré, en parallèle pour chaque puits du groupe de puits, pour calculer, à l'aide de la voie respective du premier pipeline de données, un résultat de valeur actualisée nette, NPV, pour le puits sur la base du résultat de quantité du puits.

20. Simulateur de production parallèle selon la revendication 12, dans lequel le premier ou le deuxième pipeline de données est attribué à un fil d'exécution parmi une pluralité de fils d'exécution.

21. Procédé (900) pour un simulateur de production parallèle pour prévoir des quantités produites en fonction de paramètres de production déterminés qui optimisent une valeur de gain d'un champ pétrolifère mature lors de l'application des paramètres de production déterminés pour exploiter ledit champ pétrolifère, comprenant :

la réception d'une pluralité d'ensembles de données de paramètres de production correspondant respectivement à une pluralité de scénarios, la pluralité de scénarios comprenant chacun une ou plusieurs zones et comprenant un ensemble de puits du champ pétrolifère, et la pluralité d'ensembles de données de paramètres de production comprenant chacun une valeur de paramètre de production pour chaque puits du scénario correspondant ;

l'attribution à chaque puits de chaque scénario d'un indice de cellule ;

l'attribution à chaque zone de chaque scénario d'un indice de cellule de zone ;

l'alignement de la pluralité d'ensembles de données de paramètres de production dans un premier réseau unidimensionnel formé dans la mémoire de telle sorte que la valeur de paramètre de production pour chaque puits de chaque scénario soit stockée dans une cellule respective du réseau unidimensionnel, la cellule respective ayant un indice égal à l'indice de cellule attribué au puits ;

l'association de l'indice de cellule, pour chaque puits de chaque scénario, à une première unité de calcul dédiée parmi une pluralité d'unités de calcul, une unité de calcul parmi la pluralité d'unités de calcul étant un fil d'exécution parmi une pluralité de fils d'exécution d'un processeur à instruction unique, fils d'exécution multiples, SIMT, du simulateur de production parallèle ou une voie d'un pipeline de données d'un processeur à instruction unique, données multiples, SIMD, du simulateur de production parallèle ;

l'association de l'indice de cellule de zone, pour chaque zone de chaque scénario, à une deuxième unité de calcul dédiée parmi la pluralité d'unités de calcul ; et

en parallèle, pour chaque puits de chaque scénario,

le calcul d'un résultat intermédiaire pour le puits sur la base de la valeur de paramètre de production pour le puits ;

le calcul d'un résultat intermédiaire basé sur une zone pour le puits sur la base des résultats précédents calculés pour chaque puits de la zone ; et

le calcul d'un résultat de quantité pour le puits sur la base du résultat intermédiaire basé sur une zone.

FIG.1

EP 3 729 210 B1

# FIG.2

# FIG.3

FIG.4

FIG.5

FIG.6

FIG.7

FIG.8

**FIG.9**

900

Receive a plurality of production parameter data sets corresponding respectively to a plurality of scenarios, the plurality of scenarios each including one or more zones and comprising a set of wells of the oil field, and the plurality of production parameter data sets each including a production parameter value for each well of the corresponding scenario — 902

Assign each well of each scenario a cell index — 904

Assign each zone of each scenario a zone cell index — 906

Align the plurality of production parameter data sets in a first one-dimensional array formed in the memory such that the production parameter value for each well of each scenario is stored in a respective cell of the one-dimensional array, the respective cell having an index equal to the cell index assigned to the well — 908

Associate the cell index, for each well of each scenario, with a first dedicated computation unit of a plurality of computation units, wherein a computation unit of the plurality of computation units is a thread of a plurality of threads or a lane of a data pipeline — 910

Associate the zone cell index, for each zone of each scenario, with a second dedicated computation unit of the plurality of computation units — 912

**1006**

**1004**

Processor

**1000**

**1008**

Main memory

**1002**                                **1016**

User Input/Output Interface(s)        User Input/Output Device(s)

**1010**

Secondary memory

**1012**

Hard disk drive

**1014**                                **1018**

Removable storage drive               Removable storage unit

**1020**                                **1022**

Interface                             Removable storage unit

Communication infrastructure

**1024**                                **1028**

Communications Interface              Remote device(s), network(s),entily(ies)

Communications Path 1026

# FIG.10

**REFERENCES CITED IN THE DESCRIPTION**

**Patent documents cited in the description**

- US 81694010
- US 8412501 B
- US 67569112
- US 9031821 B
- US 2013191091 A1
- US 2011313744 A1